# EUROPEAN PATENT APPLICATION

(11) **EP 4 564 153 A1**
(43) Date of publication of application: **04.06.2025**
(21) Application number: 23872731.7
(22) Date of filing: 07.07.2023
(51) Int. Cl.: G06F 3/14, H04W 4/80, G06F 3/01

(54) **SCREEN EXTENSION DEVICE IN ELECTRONIC DEVICE AND OPERATION METHOD THEREOF**

(30) Priority: 26.09.2022 KR 20220122018; 28.10.2022 KR 20220140931
(71) Applicant: Samsung Electronics Co., Ltd., Suwon-si, Gyeonggi-do 16677 (KR)
(72) Inventor: HWANG, Sunpil, Suwon-si Gyeonggi-do 16677 (KR); KIM, Jeoungju, Suwon-si Gyeonggi-do 16677 (KR); KIM, Hyunwoo, Suwon-si Gyeonggi-do 16677 (KR); PARK, Chanmin, Suwon-si Gyeonggi-do 16677 (KR); CHAE, Sangwon, Suwon-si Gyeonggi-do 16677 (KR)
(74) Representative: HGF
(86) International application number: PCT/KR2023/009692
(87) International publication number: WO 2024/071606

(57) **Abstract**

The present invention relates to an electronic device for displaying a mirroring screen by interworking with an external electronic device, and an operation method of the electronic device. An external device may obtain mirroring data and use the obtained mirroring data to display a mirroring image on a first display area allocated in a display. The external device may obtain extension mirroring data from previous mirroring data having been used to display the mirroring image and, in response to a user's gesture, use the extension mirroring data to display an extension mirroring image on at least one extension display area allocated in the display in addition to the first display area.

## Description

### [Technical Field]

Embodiments of the disclosure relate to a screen extension device and a method for operating the same in an electronic device.

### [Background Art]

A digital device may install various applications (hereinafter referred to as 'apps') providing specific functions or services. The digital device may execute an installed app in response to the user's request. The digital device may display information according to the execution of an app program through a display. The digital device may include an electronic device such as a smartphone, a mobile phone, or a tablet device that is easy to carry by the user.

Efforts are being made to reduce the size of the portable digital devices so that they are easy for users to hold, or in terms of aesthetics. Thus, the digital device may have a relatively small screen size as compared to display devices, such as televisions or monitors. When multimedia content providing video, such as in movies, TV shows, or games, is used on a digital device having a relatively small screen size as compared with the display device, the user's satisfaction may be reduced.

### [Detailed Description of the Invention]

### [Technical Solution]

An embodiment of the disclosure may provide an electronic device extending a mirroring screen through interaction with the user in a mirroring system mirroring the screen of a digital device and a method for operating the same.

According to an embodiment, an electronic device may comprise a display module configured to display a mirroring image on a display window, a communication module configured to perform communication with an external device, a sensor module configured to detect a user's gesture and generate a sensing signal corresponding to the detected user gesture, a memory configured to allocate one or more buffer areas, and at least one processor electrically connected to the display module, the communication module, the sensor module, or the memory and configured to control an operation of the display module, the communication module, the sensor module, or the memory. The at least one processor may receive mirroring data from the external device through the above communication module, control the display module to display a mirroring image in a first display area allocated in the display window using the mirroring data, and control the display module to display an extended mirroring image in at least one extended display area allocated in the display window using the mirroring data 31 according to the user gesture detected by the sensor module through interaction with the user.

According to an embodiment, a method for display in an electronic device may comprise displaying a mirrored image in a first display area allocated on a display based on a mirroring function. The display method may comprise temporarily storing mirroring data corresponding to the mirroring image. The display method may comprise displaying an extended mirroring image in at least one extended display area allocated on the display using the mirroring data according to a user gesture obtained through interaction with a user.

According to an embodiment of the disclosure, as an extended mirroring screen is provided by reusing the mirroring image provided as the mirroring screen through interaction with the user on the external device providing the mirroring screen, it is possible to reduce traffic of the radio channel or power consumption.

The technical objects of the disclosure are not limited to the foregoing, and other technical objects may be derived by one of ordinary skill in the art from example embodiments of the disclosure.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

### [Brief Description of Drawings]

FIG. 1 is a view conceptually illustrating a mirroring function performed in a mirroring system according to an embodiment.
FIG. 2 is a view illustrating a procedure for a mirroring function in a mirroring system according to an embodiment.
FIG. 3 is a block view illustrating a mirroring system for supporting screen mirroring according to an embodiment.
FIG. 4 is a view illustrating a functional configuration of a source device supporting screen mirroring, according to an embodiment.
FIG. 5 is a view illustrating a functional configuration of an external device supporting screen mirroring, according to an embodiment.
FIG. 6 is an exemplary view illustrating screen display of a virtual space in an external device according to an embodiment.
FIG. 7 is an exemplary view illustrating extending a mirroring screen in an external device of a mirroring system according to an embodiment.
FIG. 8 is a view illustrating a processing procedure for providing a mirroring function in a mirroring system according to an embodiment.
FIG. 9 is a view illustrating a processing procedure for a mirroring and event processing operation in a mirroring system according to an embodiment.
FIGS. 10A and 10B are control flowcharts illustrating displaying a mirroring image by an external device in a mirroring system according to an embodiment.
FIG. 11A is an exemplary view illustrating extending a mirroring screen in an external device supporting a mirroring function according to an embodiment.
FIG. 11B is an exemplary view illustrating extending a mirroring screen in an external device supporting a mirroring function according to an embodiment.
FIG. 12 is an exemplary view illustrating extending a mirroring screen using a 3D mirroring image in a mirroring system according to an embodiment.
FIG. 13 is an exemplary view illustrating providing an interaction in an extended display area by an external device constituting a mirroring system according to an embodiment.
FIG. 14 is a history hierarchy tree illustrating managing an extended display area in a mirroring system according to an embodiment.
FIG. 15 is an exemplary view illustrating self-operating an extended display area in a mirroring system according to an embodiment.
FIG. 16 is a view illustrating an example in which an external device extends a mirroring image in a time space, according to an embodiment.
FIG. 17 is a control flowchart for extending a mirroring image in a time space by an external device, according to an embodiment.
FIG. 18 is a block diagram illustrating an electronic device in a network environment according to various embodiments.

In connection with the description of the drawings, the same or similar reference numerals may be used to denote the same or similar elements.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

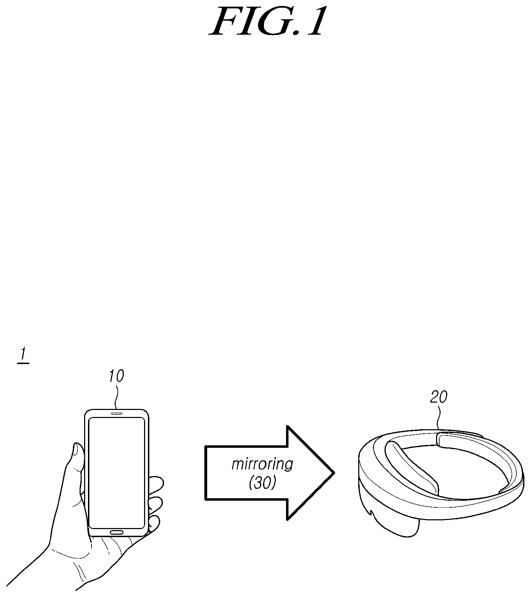

FIG. 1 is a view conceptually illustrating a mirroring function performed in a mirroring system 1 according to an embodiment.

Referring to FIG. 1, a mirroring system 1 may include at least two electronic devices. The at least two electronic devices may include a source device 10 as a first electronic device and an external device 20 as at least one second electronic device.

The source device 10 may generate a mirroring image according to a mirroring function and provide the mirroring image to the external device 20. The source device 10 may generate a virtual display in response to an app execution request from the external device 20, and execute a target app on the virtual display to obtain an image to be mirrored to the external device 20 (hereinafter referred to as a 'mirroring image'). The external device 20 may include, e.g., a mirroring image in mirroring data and transmit it to the external device 20. The mirroring data may include data (hereinafter, referred to as 'mirroring metadata') to be used to mirror the mirroring image. The mirroring metadata may include, e.g., information such as size, resolution, DPI, or display position of the mirroring image. The source device 10 may be, e.g., a digital device such as a smartphone or a tablet PC in which a program such as an app may be installed or executed.

The external device 20 may be a screen extension device that extends an area (hereinafter, referred to as a 'mirroring display area') for displaying the mirroring image provided by the source device 10 for a mirroring function. The external device 20 may be, e.g., a digital device such as a wearable device, a smartphone, a tablet PC, or a personal computer having its own display. The wearable device may be a digital electronic device that may be attached to/detached from the user's body or clothing. The wearable device may have various shapes such as, e.g., a T-shirt, glasses, bracelets, watches, and shoes. For example, the wearable device may include a smart watch that the user may wear on her wrist, a Bluetooth earphone that the user may wear on her ear, or a head mounted display (HMD) such as smart glasses that the user may wear like glasses. The smart glasses, which is one of the external devices 20, may display a desired image in a space processed based on an extended reality technology. A space (e.g., a mirroring display area) processed based on the extended reality technology may be, e.g., a partial or entire display area to display a virtual image (e.g., a mirroring image) in the display area (or a display window) of the external device 20 capable of displaying a real image. The extended reality technology may be a technology that supports at least one of virtual reality (VR), augmented reality (AR), and mixed reality (MR). The mirroring screen may extend the screen of the app executed by the source device 10 in the virtual display. For example, the screen extension in the mirroring function may include a VR extended screen, an AR extended screen, or an MR extended screen depending on the application technology.

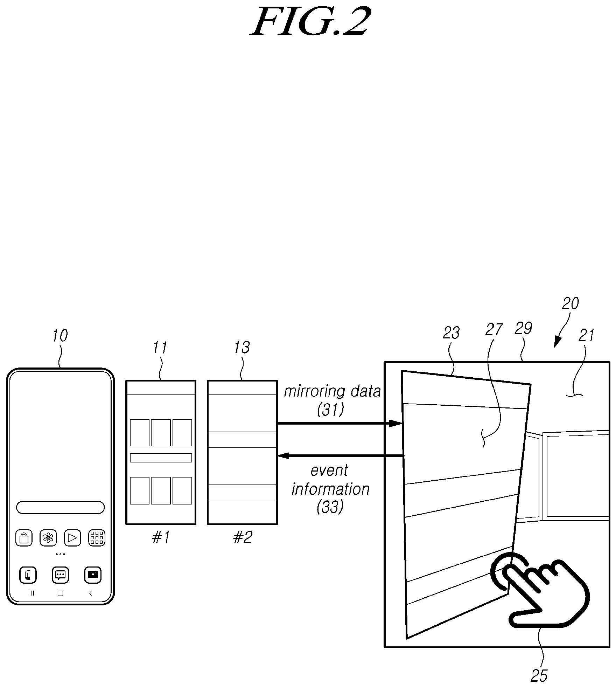

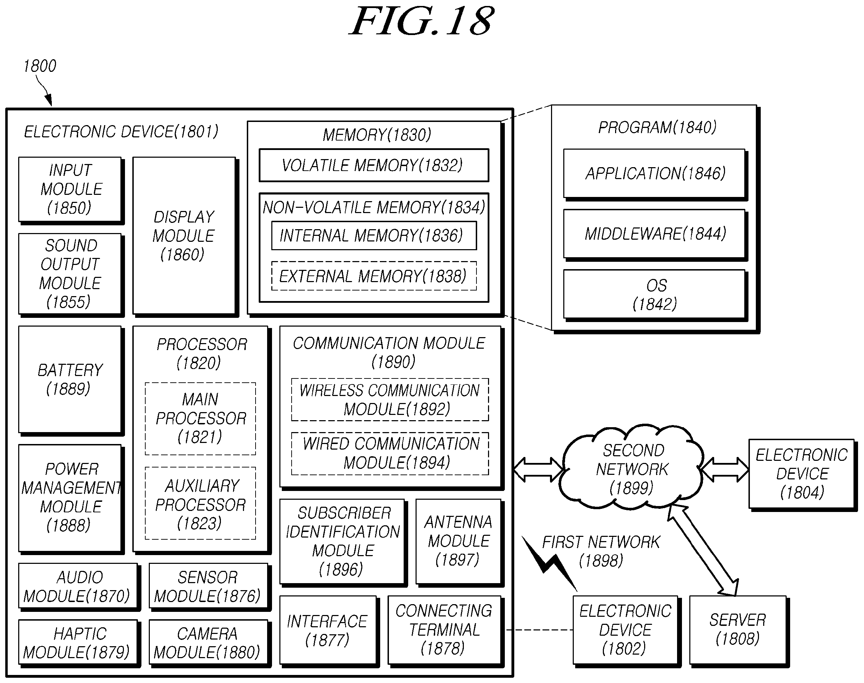

The source device 10 and the external device 20 may be connected for a mirroring function based on a protocol supporting a predetermined communication scheme (hereinafter referred to as a "communication protocol"). The connection for the mirroring function may allocate a radio channel for transmitting or receiving data according to the mirroring function (e.g., mirroring data 31 or event information 33 of FIG. 2). The communication protocols may be protocols provided to perform communication in a network environment, such as a short-range communication network (e.g., the first network 1898 of FIG. 18) or a long-range communication network (e.g., the second network 1899 of FIG. 18). The protocols provided for the short-range communication network 1898 may include, e.g., Bluetooth, Wi-Fi direct or IrDA. The long-range communication networks 1899 may include, e.g., a legacy cellular network, a 5G network, a next-generation telecommunication network, the Internet, or a computer network (e.g., a remote communication network such as LAN or WAN).

The source device 10 and the external device 20 may enter a state in which a radio channel capable of transmitting data (e.g., mirroring data 31 or event information 33 of FIG. 2) to a counterpart device or receiving data (e.g., mirroring data 31 or event information 33) from the counterpart device is formed by performing a connection procedure. The connection procedure may be triggered, e.g., by the external device 20 requesting a mirroring function from the source device 10. However, the mirroring function request by the external device 20 may be made, e.g., after a radio channel is formed with the source device 10 by the connection procedure.

The source device 10 may transmit or receive mirroring-related data for the mirroring function 30 to or from the external device 20 through the radio channel allocated by the connection procedure. The source device 10 may transmit, e.g., mirroring data for the mirroring function (e.g., mirroring data 31 of FIG. 2) to the external device 20. The mirroring data 31 may transfer image data for the screen itself displayed on the virtual display of the source device 10 as it is, e.g., rather than transferring it as individual layouts, codes, or functional units.

The external device 20 may transmit, e.g., event information (e.g., event information 33 of FIG. 2) obtained through interaction with the user (e.g., interaction 25 of FIG. 2) to the source device 10. The user may control a screen to be displayed in an extended space (e.g., the mirroring display area 23 of FIG. 2) through the interaction 25. The interaction 25 may be performed by, e.g., tracking the movement of the hand by the user (hand tracking) or tracking the user's gaze (eye tracking).

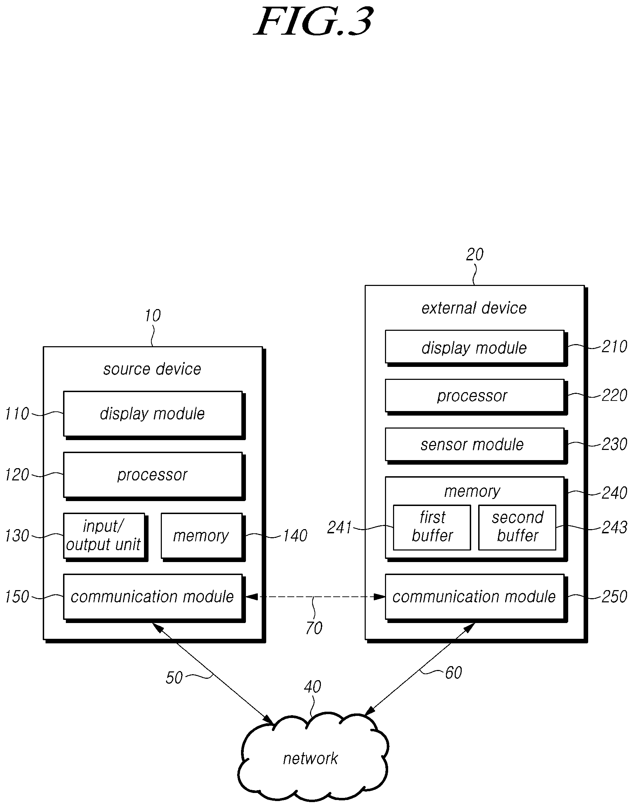

The external device 20 may display the mirroring image in the whole or part of the display area (e.g., the mirroring display area 23 of Fig. 2) provided for the mirroring function on the display (e.g., the display module 210 of Fig. 3) using the mirroring data provided from the source device 10. The mirroring screen in the external device 20 may be a screen in which the mirroring image is displayed on the whole or part of the mirroring display area 23.

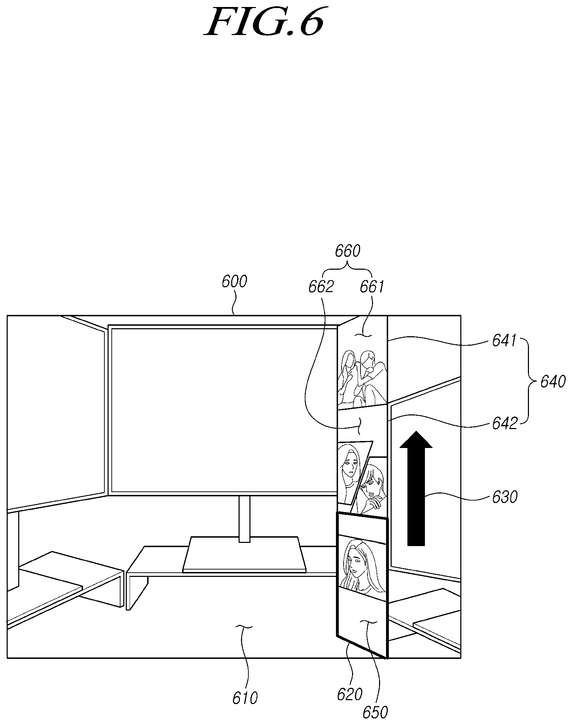

According to an example, the external device 20 may allocate the mirroring display area 23 to include a first display area (e.g., the first display area 620 of FIG. 6) and/or at least one extended display area (e.g., the extended display area 640 of FIG. 6). The external device 20 may allocate the mirroring display area 23 to include, e.g., the first display area (e.g., the first display area 620 of FIG. 6). The external device 20 may allocate the mirroring display area 23 to include at least one extended display area (e.g., the extended display area 640 of FIG. 6). The external device 20 may allocate the mirroring display area 23 to include, e.g., a first display area (e.g., the first display area 620 of FIG. 6) and at least one extended display area (e.g., the extended display area 640 of FIG. 6).

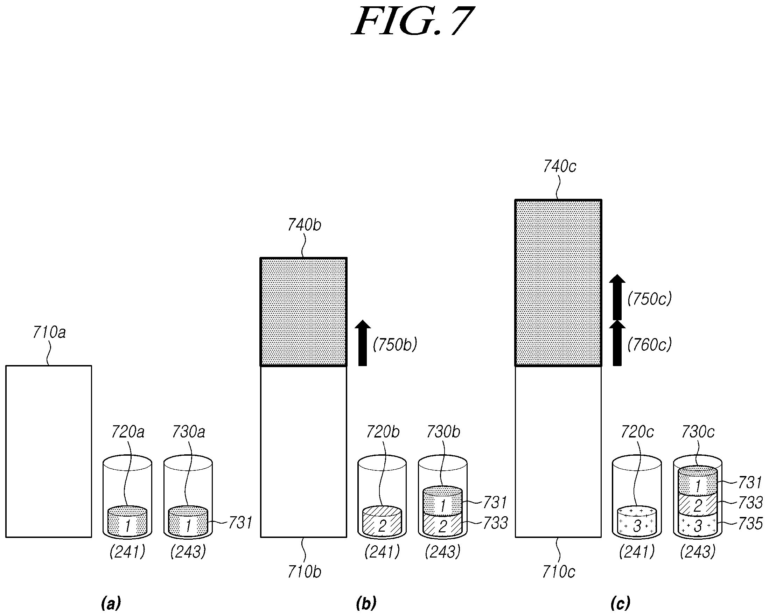

According to an example, the external device 20 may provide a buffer (or buffer area) for temporarily storing or rendering the mirroring image. The external device 20 may implement an extended display area (e.g., the extended display area 640 of FIG. 6) in addition to the first display area (e.g., the first display area 620 of FIG. 6) that will provide the mirroring image by enhancing the buffer or buffer area. The external device 20 may have a first buffer (or first buffer area (e.g., the first buffer 241 of Fig. 3)) for temporarily storing or rendering the mirroring data (e.g., the first to third mirroring data 720a, 720b, and 720c of Fig. 7) to be displayed in, e.g., the first display area (e.g., the first display area 620 of Fig. 6). The external device 20 may have a second buffer (or second buffer area (e.g., the second buffer 243 of Fig. 3)) for temporarily storing or rendering the extended mirroring data (e.g., the first to third extended mirroring data 731, 733, and 735 of Fig. 7) to be displayed in, e.g., at least one extended display area (e.g., the extended display area 640 of Fig. 6). The external device 20 may analyze the information (e.g., motion information according to the user's gesture) obtained through, e.g., interaction (e.g., the interaction 25 of Fig. 2) with the user, and display the extended mirroring image in at least one extended display area (e.g., the extended display area 640 of Fig. 6) using the extended mirroring data (e.g., the first to third extended mirroring data 731, 733, and 735 of Fig. 7) temporarily stored in the second buffer (or second buffer area (e.g., the second buffer 243 of Fig. 3)) by the analysis result.

If a request to terminate the mirroring function occurs, the source device 10 and/or the external device 20 may terminate the mirroring function after releasing all the resources allocated for the mirroring function. The source device 10 may discard, e.g., at least one virtual display generated for the mirroring function. The external device 20 may release, e.g., the display area (e.g., the mirroring display area 23 of FIG. 2) allocated for the mirroring function. The external device 20 may, e.g., release allocation of the buffer (e.g., first buffer 21 or second buffer 23) or the buffer area (e.g., first buffer area or second buffer area) used for the mirroring function.

FIG. 2 is a view illustrating a procedure for the mirroring function in a mirroring system (e.g., the mirroring system 1 of FIG. 1) according to an embodiment.

Referring to FIG. 2, the mirroring system 1 may include a source device 10 and at least one external device 20. The source device 10 may provide one or more virtual displays to provide a mirroring image to the external device 20 for a mirroring function. The virtual display may correspond to, e.g., an area allocated to generate image data for displaying the mirroring screen on the memory.

The source device 10 may share its app list with the external device 20. The app list may be, e.g., a list of apps installed in the source device 10. The source device 10 may generate an initial mirroring image including icons of apps to provide the mirroring function on a virtual display (e.g., the first virtual display 11 and the second virtual display 13), and provide initial mirroring data 31 corresponding to the initial mirroring image to the external device 20. The app list may include, e.g., a two-dimensional app (2D app), a three-dimensional widget app (3D widget app), or a three-dimensional (3D) immersive app. The 2D app may be, e.g., an app that provides a flat image. The 3D widget app may be, e.g., a 3D app that may be arranged in a large number in a processed space (AR space, VR space, and extended reality space). The 3D immersive app may be, e.g., a 3D app capable of controlling the entire processed space (AR space, VR space, and extended reality space).

The external device 20 may obtain information about an app to use the mirroring function from the app list shared by the source device 10. The external device 20 may receive the initial mirroring data 31 from the source device 10. The external device 20 may display an initial mirroring screen to use the mirroring function in the whole or part of the mirroring display area 23 provided in the display module 110 using information about the app and/or the initial mirroring data 31.

The source device 10 may initiate the mirroring function in response to an app execution request from the external device 20. If the mirroring function is initiated, the source device 10 may generate an encoder and/or a virtual display (e.g., first virtual display 11 and/or second virtual display 13) for each one or a plurality of apps requested to be executed by the external device 20. The source device 10 may generate a plurality of virtual displays to execute multiple apps at the same time. The source device 10 may generate and operate, e.g., one to six virtual displays.

The source device 10 may launch an app corresponding to the virtual display. The source device 10 may transmit mirroring data 31 including the mirroring image that may be displayed on the virtual display to the external device 20 by executing the app. The mirroring data 31 may include, e.g., data for mirroring the virtual screen displayed on the virtual display generated by the source device 10 to the mirroring display area 23 allocated to the display window 29 of the external device 20 as it is.

The external device 20 may display or project a real space image through the entire area of the display window 29 of the display window 29, and allocate the mirroring display area 23 to a partial area of the display window 29 to display the mirroring image 27 by the mirroring data 31 provided from the source device 10. The mirroring display area 23 may include, e.g., a plurality of display areas (e.g., the first display area 620 or at least one extended display area 640 of FIG. 6).

If an event is generated through the interaction 25 with the user, the external device 20 may transfer event information 33 corresponding to the generated event to the source device 10. If it is determined that the external device 20 may process the generated event on its own, e.g., the external device 20 may process it by itself. The event may be generated by an interaction 25, such as, e.g., the user touching a specific position of the mirroring image displayed in the mirroring display area 27 or scrolling.

If the source device 10 receives event information from the external device 20, the source device 10 may process the operation corresponding to the event information on the corresponding app running on the virtual displays 11 and 13. The source device 10 may provide mirroring data 31 corresponding to the image to be displayed on the virtual displays 11 and 13 to the external device 20 according to operation processing corresponding to the event information.

FIG. 3 is a block view illustrating a mirroring system (e.g., the mirroring system of FIG. 1) for supporting screen mirroring according to an embodiment.

Referring to FIG. 3, a source device (e.g., the source device 10 of FIG. 1) and an external device (e.g., the external device 20 of FIG. 1) may be connected through a network 40 based on a predetermined communication protocol. If the source device 10 and the external device 20 are connected through the network 40, a communication channel 70 according to a predetermined communication protocol may be allocated. The communication channel 70 may be, e.g., a radio channel or a wired channel.

For example, the source device 10 may include a display module 110, a processor 120, an input/output unit 130, a memory 140, or a communication module 150.

The display module 110 may include a display panel or a touch panel. The display panel may visually provide information to the outside (e.g., the user) of the source device 10. The display 110 may include, for example, a display, a hologram device, or a projector and control circuitry to control a corresponding one of the display, hologram device, and projector. The touch panel may include a touch sensor configured to detect the user's touch, or a pressure sensor configured to measure the intensity of a force generated by the touch. The operation of the display module 110 may be controlled by electrical connection with the processor 120. The operation of the display panel or touch panel included in the display module 110 may be independently controlled by electrical connection with the processor 120. In an embodiment, the display panel may be controlled by the processor 120 to visually provide display information to be displayed to the outside (e.g., the user).

The processor 120 may execute software (e.g., the program 1840 of FIG. 18) to control at least one other component (e.g., hardware or software component), such as an electrically connected display module 110, input/output module 1130, memory 140, or communication module 150, and may perform various data processing or computations. As at least part of the data processing or computation, the processor 120 may store instructions or data received from other components (e.g., the display module 110, communication module 150, or input/output portion 127) in the memory 140 (e.g., volatile memory), or process the instructions or data stored in the memory 140, and store the processed resulting data in the storage unit 140.

The input/output unit 130 may receive a command or data to be used by a component (e.g., the processor 120) of the source device 10, from the outside (e.g., a user) of the source device 10. The input/output unit 130 may include, for example, a microphone, a mouse, a keyboard, keys (e.g., buttons), or a digital pen (e.g., a stylus pen).

The communication module 150 may establish a direct (e.g., wired) communication channel or a wireless communication channel with the external device 20 or support communication through the established communication channel. The communication module 150 may include one or more communication processors that are operable independently from the processor 120 and supports a direct (e.g., wired) communication or a wireless communication. The communication module 150 may include a wireless communication module (e.g., the wireless communication module 1892 of Fig. 18) (e.g., a cellular communication module, a short-range wireless communication module, or a global navigation satellite system (GNSS) communication module) or a wired communication module (e.g., the wired communication module 1894 of Fig. 18) (e.g., a local area network (LAN) communication module or a power line communication (PLC) module). A corresponding one of these communication modules may communicate with the external device 20, which is an external electronic device, via a network 40 (e.g., a short-range communication network, such as Bluetooth^{™}, wireless-fidelity (Wi-Fi) direct, or infrared data association (IrDA)) or a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

The memory 140 may store various data used by at least one component (e.g., the display module 110, the processor 120, the communication module 150, or the input/output unit 127) of the source device 10. The various data may include, for example, software (e.g., the program 1840 of Fig. 18) and input data or output data for a command related thereto. The memory 140 may include, e.g., a volatile or non-volatile memory.

According to an example, the processor 120 may share the app list with the external device 20 by transferring its app list to the external device 20 through the communication module 150. The app list may be a list of apps installed in the source device 10. The processor 120 may control, e.g., the communication module 150 to connect the external device 20 and then, if receiving a mirroring request from the external device 20, transmit the app list to the external device 20 through the communication module 150. For example, the processor 120 may generate an initial mirroring image including icons of apps to provide the mirroring function on a virtual display (e.g., the first virtual display 11 and the second virtual display 13 of FIG. 2) and provide the initial mirroring data 31 corresponding to the initial mirroring image to the external device 20.

According to an example, the processor 120 may initiate the mirroring function in response to an app execution request transferred from the external device 20 through the communication module 150. If the mirroring function is initiated, the processor 120 may generate an encoder and/or a virtual display (e.g., first virtual display 11 and/or second virtual display 13 of Fig. 2) for each one or a plurality of apps requested to be executed by the external device 20. The processor 120 may generate a plurality of virtual displays to execute multiple apps at the same time. The processor 120 may generate and operate, e.g., one to six virtual displays. The processor 120 may launch an app corresponding to the virtual display. The processor 120 may transmit mirroring data 31 including the mirroring image that may be displayed on the virtual display to the external device 20 by executing the app. The mirroring data 31 may include, e.g., data for mirroring the virtual screen displayed on the virtual display generated by the processor 120 to the mirroring display area 23 allocated to the display window 29 of the external device 20 as it is.

According to an embodiment, if receiving event information from the external device 20 through the communication module 150, the processor 120 may process the operation corresponding to the event information on the corresponding app running on the virtual displays 11 and 13. The source device 10 may provide mirroring data 31 corresponding to the image to be displayed on the virtual displays 11 and 13 to the external device 20 according to operation processing corresponding to the event information.

For example, the external device 20 may include a display module 210, a processor 220, a sensor module 230, a memory 240, or a communication module 250. The memory 240 may include a first buffer 241 or a second buffer 243. Although not shown, at least one of the first buffer area and the second buffer area may be allocated to a register inside the processor 220. The first buffer 241 or the first buffer area may temporarily store mirroring data provided from the source device 10. The mirroring data temporarily stored in the first buffer 241 or the first buffer area may be discarded after another mirroring image is displayed in the first display area.

The display module 210 may visually provide information (e.g., real image information or mirroring image information) to the outside (e.g., the user) of the external device 20. The display 210 may include, for example, a display, a hologram device, or a projector and control circuitry to control a corresponding one of the display, hologram device, and projector. The operation of the display module 210 may be controlled by electrical connection with the processor 220.

The processor 220 may execute software (e.g., the program 1840 of FIG. 18) to control at least one other component (e.g., hardware or software component), such as an electrically connected display module 210, sensor module 230, memory 240, or communication module 250, and may perform various data processing or computations. As at least part of the data processing or computation, the processor 220 may store instructions or data received from other components (e.g., the display module 210, sensor module 230, or communication module 250) in the memory 240 (e.g., volatile memory), or process the instructions or data stored in the memory 240, and store the processed resulting data in the storage unit 240.

The sensor module 230 may detect an operation state (e.g., power or temperature) of the external device 20, an external environment state (e.g., a user state), or a movement of a hand or gaze for interaction with the user, and may generate an electrical signal or a data value corresponding to the detected state. The sensor module 230 may include, e.g., a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The communication module 250 may establish a direct (e.g., wired) communication channel or a wireless communication channel with the source device 10 or support communication through the established communication channel. The communication module 250 may include one or more communication processors that are operable independently from the processor 220 and supports a direct (e.g., wired) communication or a wireless communication. The communication module 250 may include a wireless communication module (e.g., the wireless communication module 1892 of Fig. 18) (e.g., a cellular communication module, a short-range wireless communication module, or a global navigation satellite system (GNSS) communication module) or a wired communication module (e.g., the wired communication module 1894 of Fig. 18) (e.g., a local area network (LAN) communication module or a power line communication (PLC) module). A corresponding one of these communication modules may communicate with the source device 10, which is an external electronic device, via a network 40 (e.g., a short-range communication network, such as Bluetooth^{™}, wireless-fidelity (Wi-Fi) direct, or infrared data association (IrDA)) or a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

The memory 240 may store various data used by at least one component (e.g., the display module 210, the processor 220, the communication module 250, or the input/output unit 127) of the external device 20. The various data may include, for example, software (e.g., the program 1840 of Fig. 18) and input data or output data for a command related thereto. The memory 240 may include, e.g., a volatile or non-volatile memory.

The external device 20 may further include a camera module. The camera module may capture a still image and a video. The camera module may include one or more lenses, image sensors, image signal processors, or flashes. For example, the camera module may be used for interaction with the user.

According to an example, the processor 220 may include a face tracking function, a hand tracking function, or a motion tracking function. The processor 220 may perform an interaction with the user using at least one of the face tracking function, the hand tracking function, or the motion tracking function. The face tracking function may extract data of a part corresponding to a face from the user image captured by the camera module and may track a change in facial expression based on the extracted data. The hand tracking function may extract data of a part corresponding to the hand from the user image captured by the camera module and track the movement of the hand based on the extracted data. The hand tracking function may track a hand movement based on sensing information provided from the sensor module 230 or sensing information provided from the source device 10. The motion tracking function may track the user's movement from the user image captured by the camera module. The motion tracking function may track the user's movement based on sensing information provided from the sensor module 230 or sensing information provided from the source device 10.

According to an example, the processor 220 may control the communication module 250 to connect the source device 10 and then request the mirroring function. The processor 220 may receive an app list from the source device 10 through the communication module 250 in response to the mirroring request. The processor 220 may obtain information about an app to use the mirroring function from the app list. The processor 220 may receive the initial mirroring data 31 from the source device 10. The processor 220 may display an initial mirroring screen to use the mirroring function in the whole or part of the mirroring display area provided in the display module 210 using information about the app and/or the initial mirroring data 31.

According to an example, the external device 220 may display or project a real space image through the entire area of the display window of the display module 210, and display the mirroring image 27 using the mirroring data 31 provided from the source device 10 in the mirroring display area allocated in a partial area of the display window. The mirroring display area may include, e.g., a plurality of display areas (e.g., the first display area 620 or at least one extended display area 640 of FIG. 6). The processor 220 may display the mirroring image in the first display area 620 using mirroring data transferred from the source device 10 in real time. The mirroring data transferred in real time may be temporarily stored in the first buffer 241 or the first buffer area allocated in the memory 240. The mirroring data temporarily stored in the first buffer 241 or the first buffer area may be updated with the next received mirroring data if the mirroring image exposed in the first display area 620 is changed. The processor 220 may display an extended mirroring image on the extended display area 640 using mirroring data displayed in the first display area 620 or having a displayed history. The mirroring data displayed in the first display area 620 or having a displayed history may be temporarily stored in the second buffer 243 or the second buffer area allocated in the memory 240. The mirroring data stored in the second buffer 243 or the second buffer area may be discarded in order from old to new or by the user's selection considering the free space of the storage area.

According to an example, if an event is generated through the interaction 25 with the user, the processor 220 may transfer event information 33 corresponding to the generated event to the source device 10. If the processor 220 determines that the generated event may be processed by itself, e.g., the processor 220 may directly process the generated event. The event may be generated by an interaction 25, such as, e.g., the user touching a specific position of the mirroring image displayed in the mirroring display area 27 or scrolling.

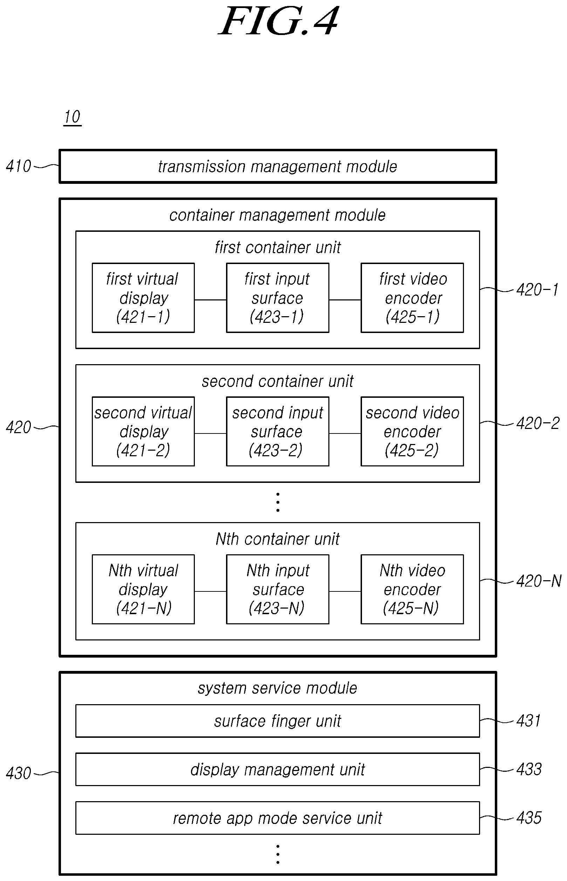

FIG. 4 is a view illustrating a functional configuration of a source device (e.g., the source device 10 of FIG. 1) supporting screen mirroring according to an embodiment.

Referring to FIG. 4, the source device 10 may include a transfer management module (transfer manager) 410, a container management module (app execution container manager) 420, or a system service module (system services) 430.

The transmission management module 410 may serve to receive an event request, mirroring request, or response (ACK) message from an external device (e.g., the external device 20 of FIG. 1). The transmission management module 410 may serve to transmit mirroring data (e.g., the mirroring data 310 of FIG. 2) for the mirroring function to the external device 20.

The container management module 420 may serve to control the mirroring logic. The container management module 420 may generate a container unit (app execution container) 420-1, 420-2, and 420-N for executing the requested app if, e.g., an app execution request from the external device 20 is provided through the transmission management module 410. The container management module 420 may own or manage one or more container units 420-1, 420-2, and 420-N for the mirroring function. If an app-related request (e.g., the event request 33 of FIG. 2) is provided through the transmission management module 410 from the external device 20, the container management module 420 may distribute the request and/or data to the corresponding container using the container identifier (id) generated in response to the app for which the request was received. For example, if an event is generated in the system service module 430, the container management module 420 may specify a target container using a display identifier (display Id) or a task identifier (task Id). The container management module 420 may serve to send an event to the specified target container or to transfer the event to the external device 20 through the transmission management module 410.

The container units 420-1, 420-2, and 420-N may serve to control each mirroring session for the mirroring function. The container units 420-1, 420-2, and 420-N may have a unique identifier ID. The container units 420-1, 420-2, and 420-N may form a mapping relationship with a remote app container unit (remote app container manager) provided in the external device 20 using the unique identifier. The container units 420-1, 420-2, and 420-N may have a package name, a task identifier (id), user identification information (user ID), or the like of the running app. the container units 420-1, 420-2, and 420-N, respectively, may include virtual displays 421-1, 421-2, and 421-N, input surfaces 423-1, 423-2, and 423-N, or video encoders 425-1, 425-2, and 425-N.

For example, the container units 420-1, 420-2, and 420-N may generate virtual displays by generating the video encoders 425-1, 425-2, and 425-N and designating the input surfaces 423-1, 423-2, and 423-N of the video encoders 425-1, 425-2, and 425-N as surfaces of the virtual displays 421-1, 421-2, and 421-N. The container units 420-1, 420-2, and 420-N may execute apps corresponding to the virtual displays 421-1, 421-2, and 421-N.

According to an example, if an app is executed on the virtual displays 421-1, 421-2, and 421-N, the surface finger unit 431 included in the system service module 430 may display the app screen on the input surface of the corresponding virtual display. The mirroring data regarding the image or screen displayed on the virtual displays 421-1, 421-2, and 421-N by the surface finger unit 431 may be transferred to the video encoders 425-1, 425-2, and 425-N to be compressed. The compressed mirroring data may be transferred to the external device 20 through the transmission management module 410. The external device 20 may output the mirroring screen using the transferred mirroring data.

The system service module 430 may include a remote app mode service unit 435, a surface finger 431, or a display manager 433. The remote app mode service unit 435 may perform a function requiring system authority, such as executing an app on the virtual displays 421-1, 421-2, and 421-N or terminating the app.

As described above, the source device 10 may execute each of the plurality of apps on an independently generated virtual display, and transmit a screen according to the execution of the app on each virtual display to the external device 20 so that multiple apps may float in the virtual space at the same time. The execution state of each of the apps executed on the virtual display may be managed by the container management module 420. For example, the container management module 420 may manage each of the apps on a container basis including a class in charge of input processing and the video encoder.

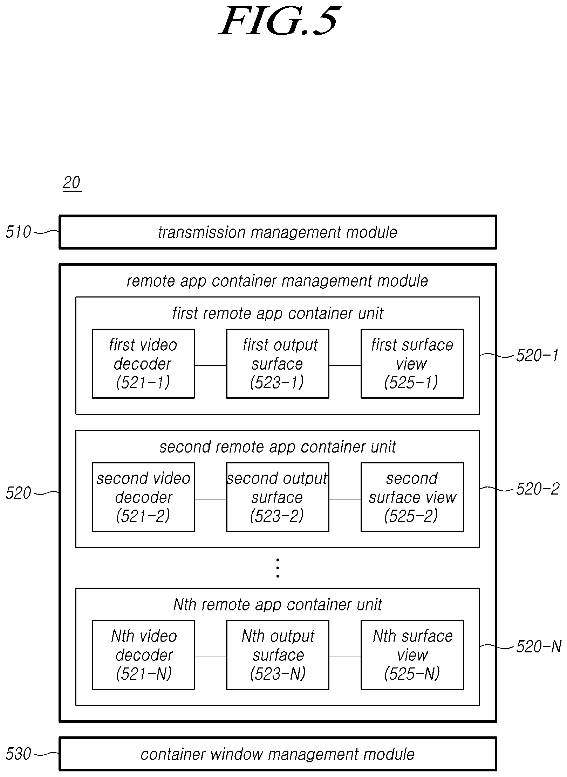

FIG. 5 is a view illustrating a functional configuration of an external device (e.g., the external device 20 of FIG. 1) supporting screen mirroring according to an embodiment.

Referring to FIG. 5, the external device 20 may include a Transfer Manager 510, a Remote App Container Manager 520, or a Container Window Manager 530.

The remote app container management module 520 may serve to generate, dismantle/destroy, or manage one or more remote app container units 520-1, 520-2, and 520-N. The remote app container management module 520 may serve to distribute mirroring data transferred from the source device 10 through the transmission management module 510 to the corresponding remote app container units 520-1, 520-2, and 520-N. The remote app container management module 520 may be provided corresponding to the container management module 420 of the source device 10.

The remote app container units 520-1, 520-2, and 520-N may be responsible for one screen mirroring session. The remote app container units 520-1, 520-2, and 520-N may have a unique identifier (id). The remote app container units 520-1, 520-2, and 520-N may correspond to a specific container unit that is one of the container units 420-1, 420-2, and 420-N of the source device 10 using the container id.

The remote app container units 520-1, 520-2, and 520-N may display the mirroring image in the first display area or the extended area using the resolution and/or DPI determined by the container window management module 530.

The remote app container units 520-1, 520-2, and 520-N may include video decoders 521-1, 521-2, and 521-N, output surfaces 523-1, 523-2, and 523-N, or surface views 525-2, and 525-N. The remote app container units 520-1, 520-2, and 520-N may generate video decoders 521-1, 521-2, and 521-N or surface views 525-2, 525-2, and 525-N in response to execution of the app for the mirroring function in the source device 10. The video decoders 521-1, 521-2, and 521-N may decode the compressed mirroring data transferred from the source device 10 through the transmission management module 510. The output surfaces 523-1, 523-2, and 523-N may transfer the mirroring data decompressed by the video decoders 521-1, 521-2, and 521-N to the surface views 525-2, 525-2, and 525-N. The surface views 525-2, 525-2, and 525-N may display the mirroring image in the first display area or the extended mirroring image in the extended display area using the mirroring data transferred through the output surfaces 523-1, 523-2, and 523-N.

The container window management module 530 may serve to determine the resolution and/or the DPI for the mirroring screen corresponding to the app where the mirroring function is to be provided, and provide the same to the remote app container units 520-1, 520-2, and 520-N.

The transmission management module 510 may serve to transfer a mirroring request or response (ACK) message to the source electronic device 10, or to receive mirroring-related data from the source electronic device 10 and transfer the same to the remote app container management module 520.

FIG. 6 is an exemplary view illustrating screen display of a virtual space in an external device (e.g., the external device 20 of FIG. 1) according to an embodiment.

Referring to FIG. 6, the external device 20 may include a display 600 that displays a virtual space. The display 600 may be, e.g., a transparent display. The transparent display may have a transparent window. For example, if the external device 20 is smart glasses among wearable devices, the user may view the real image 610 of the real space through the transparent window. The real image 610 may be, e.g., a see-through image or an image captured by a camera. The image captured by the camera and displayed on the display 600 may be processed or modified as necessary.

According to an example, the display 600 may include a display area (e.g., the mirroring display area 23 of FIG. 2) for providing a mirroring screen according to the mirroring function. The mirroring display area 23 may include a first display area 620 or an extended display area 640. The extended display area 640 may include one or more extended display areas 641 and 642 in response to an event 630 generated by interaction with the user such as the user's gesture.

The mirroring image 650 may be displayed in the first display area 620 by mirroring data (e.g., the mirroring data 310 of FIG. 2) last provided from the source device (e.g., the source device 10 of FIG. 1). The last provided mirroring data 31 may be temporarily stored in the first buffer (e.g., the first buffer 241 of FIG. 3) or the first buffer area. If the mirroring image 650 is displayed in the first display area 620, the mirroring data 31 temporarily stored in the first buffer 241 or the first buffer area may also be stored in the second buffer 243 or the second buffer area. The previous mirroring data stored in the second buffer 243 or the second buffer area may be used to display the extended mirroring image 660 in the extended display area 640 in response to the event 630 generated by interaction with the user, such as the user's gesture. The extended mirroring image 660 may include, e.g., a first extended mirroring image 661 displayed in the first extended display area 641 or a second extended mirroring image 662 displayed in the second extended display area 642.

As described above, the extended mirroring image 660 may be displayed in the extended display area 640 of the display 600 using mirroring data transferred in advance from the source device 10 and temporarily stored in response to the user's request. This may avoid additional resource consumption for extending the mirroring screen and provide an efficient rendering procedure, saving power consumption.

Although it is illustrated in the drawings that the extended display area 640 is formed in the upward direction of the first display area 620, the disclosure is not limited thereto. For example, the direction in which the extended display area 640 is provided may be determined considering event information obtained through interaction with the user. A direction in which the extended display area 640 is provided may be, e.g., one of the left, right, or lower direction with respect to the first display area 620. The extended display area 640 may also be extended in the rear direction with respect to the first display area 620. The extended display area 640 may be extended in, e.g., a direction in which extension is easy (e.g., a direction in which extension is easy in the display 600). The direction in which the extended display area 640 is extended does not proceed only in one direction, but may extend in a radial form in a plurality of directions. The number of extended display areas 640 that may be extended in response to event generation in the display 600 may be limited by the number of mirroring data to be used to obtain the extended mirroring image. The second buffer 243 or the second buffer area capable of limiting the number of mirroring data may be increased or decreased as necessary. The extended display area 640 allows the function and range of the app provided with the mirroring function to be additionally extended and spread. Since the extended display area 640 may utilize the entire area in the field of view (FOV) of the user wearing the external device 20, the mirroring screen may be displayed by enlarging or extending it.

As described above, it is possible to provide an immersive experience to the user by enlarging the mirroring screen to display the mirroring image whenever an event is generated through interaction with the user.

Although one first display area 620 is assumed in FIG. 6, as a plurality of first display areas are exposed, a situation in which the display area for providing the extended display area is insufficient may occur. For example, the external display 20 may operate to change the layout of arranging the first display area and/or the extended display area displayed in the display area in response to the user's request input through interaction with the user, or to remove or hide some display areas.

According to an example, although it is assumed that the real image 610 may be actually viewed by the user through the transparent window of the display 600 in Fig. 6, the external device 20 may capture an image of the front considering the user's gaze using the camera and expose the captured image through the display area.

According to an example, although it is assumed that the real image 610 may be actually viewed by the user through the transparent window of the display 600 in Fig. 6, the external device 20 may expose an arbitrarily prepared image through the display area.

According to an example, the external device 20 may divide the display area 600 into an area of interest and an area of non-interest. For example, the area of interest may be designated in the display area 600 considering the surroundings viewed by the user by eye tracking or the area reached by the user's gaze. In this case, the external device 20 may extend the extended display area 640 in a space divided as the area of interest in the display area. Even if it is not the extended display area 640, performance may be enhanced by operating a static image through the second buffer within the area of interest.

FIG. 7 is an exemplary view illustrating extending a mirroring screen in an external device (e.g., the external device 20 of FIG. 1) of a mirroring system (e.g., the mirroring system 1 of FIG. 1) according to an embodiment.

Referring to FIG. 7, if the external device 20 receives the first mirroring data 720a from the source device (e.g., the source device 10 of FIG. 1), it may temporarily store the received first mirroring data 720a in the first buffer (e.g., the first buffer 241 of FIG. 3) or the first buffer area. The external device 20 may allocate a first display area to the display, and display the first mirroring image 710a in the allocated first display area using the first mirroring data 720a. If the first mirroring image 710a is displayed in the first display area, the external device 20 may store the first mirroring data 720a temporarily stored in the first buffer 241 or the first buffer area as the first extended mirroring data 731 in the second buffer (e.g., the second buffer 243 of FIG. 3) or the second buffer area.

If the external device 20 receives the second mirroring data 720b from the source device 10, it may temporarily store the received second mirroring data 720b, instead of the first mirroring data 720a, in the first buffer (e.g., the first buffer 241 of FIG. 3) or the first buffer area. The external device 20 may display the second mirroring image 710b using the second mirroring data 720b in the first display area allocated to the display. If display of an extended mirroring image is requested (750b) through interaction with the user, the external device 20 may allocate an extended display area to the display and display the first extended mirroring image 740b in the extended display area, using the first extended mirroring data 731 stored in the second buffer (e.g., the second buffer 243 of FIG. 3) or the second buffer area. If the second mirroring image 710b is displayed in the first display area, the external device 20 may store the second mirroring data 720b temporarily stored in the first buffer 241 or the first buffer area in the second buffer (e.g., the second buffer 243 of Fig. 3) or the second buffer area, as the second extended mirroring data 733.

If the external device 20 receives the third mirroring data 720c from the source device 10, the received third mirroring data 720c may be temporarily stored in the first buffer (e.g., the first buffer 241 of FIG. 3) or the first buffer area instead of the second mirroring data 720b. The external device 20 may display the third mirroring image 710c using the third mirroring data 720c in the first display area allocated to the display. If display of an extended mirroring image is requested (750c, 760c) through interaction with the user, the external device 20 may additionally allocate an extended display area to the display and display the first extended mirroring image and the second extended mirroring image 740c in the existing and additionally allocated extended display areas, using the first extended mirroring data 731 and the second extended mirroring data 733 stored in the second buffer (e.g., the second buffer 243 of FIG. 3) or the second buffer area. If the third mirroring image 710c is displayed in the first display area, the external device 20 may store the third mirroring data 720c temporarily stored in the first buffer 241 or the first buffer area in the second buffer (e.g., the second buffer 243 of Fig. 3) or the second buffer area, as the third extended mirroring data 735.

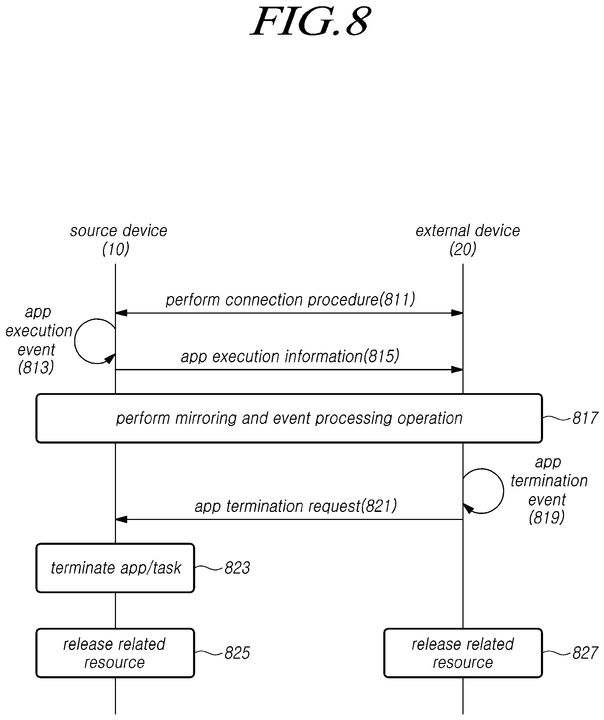

FIG. 8 is a view illustrating a processing procedure for providing a mirroring function in a mirroring system (e.g., the mirroring system 1 of FIG. 1) according to an embodiment.

Referring to FIG. 8, a mirroring system 1 may include at least two electronic devices. At least two electronic devices included in the mirroring system 1 may include, e.g., a first electronic device (e.g., the source device 10 of FIG. 1) that provides mirroring data (e.g., the mirroring data 31 of FIG. 2) and at least one second electronic device (e.g., the external device 20 of FIG. 1) that displays the mirroring data 31. The first electronic device 10 may be an external electronic device to the second electronic device 20. The second electronic device 20 may be an external electronic device to the first electronic device 10. The first electronic device 10 may be a digital device in which a program such as an app may be installed or executed, such as a smartphone or a tablet PC. The second electronic device 20 may be, e.g., not only an external device 20 such as smart glasses, but also a digital device such as a smartphone, a tablet PC, or a personal computer having its own display. For convenience of description below, the first electronic device 10 is referred to as the source device 10, and the second electronic device 20 is referred to as the external device 20. However, the operation according to the embodiment to be described below may be equally applied to an electronic device having a display such as the source device 10 or the external device 20.

The source device 10 and the external device 20 may perform a connection procedure in operation 811. The connection procedure may include an operation in which at least one of the source device 10 or the external device 20 identifies the counterpart device and then requests connection. The connection procedure may include an operation in which at least one of the source device 10 or the external device 20 accepts the connection in response to the connection request from the counterpart device. The detailed operation according to the connection procedure may be defined by a protocol (hereinafter referred to as a 'communication protocol') provided for each communication scheme supported by the source device 10 or the external device 20. The communication protocols may be protocols provided to perform communication in a network environment, such as a short-range communication network (e.g., the first network 1898 of FIG. 18) or a long-range communication network (e.g., the second network 1899 of FIG. 18). The protocols provided for the short-range communication network 1898 may include, e.g., Bluetooth, Wi-Fi direct or IrDA. The long-range communication networks 1899 may include, e.g., a legacy cellular network, a 5G network, a next-generation telecommunication network, the Internet, or a computer network (e.g., LAN or a remote communication network such as WAN). The source device 10 and the external device 20 may enter a state in which a radio channel capable of transmitting data (e.g., mirroring data 31 or event information 33 of FIG. 2) to a counterpart device or receiving data (e.g., mirroring data 31 or event information 33) from the counterpart device is formed by performing a connection procedure. The connection procedure may be triggered, e.g., by the external device 20 requesting a mirroring function from the source device 10. However, the mirroring function request by the external device 20 may be made, e.g., after a radio channel is formed with the source device 10 by the connection procedure.

If the radio channel is formed according to performing the connection procedure, the source device 10 may monitor whether an app execution event is generated in operation 813. For example, when execution of a specific app is requested by the external device 20, the source device 10 may determine the request as generation of an app execution event. To that end, the source device 10 may provide app information (e.g., an app list) that may be executed by the source device 10 to the external device 20 in response to the mirroring function request from the external device 20. The app information may be included in mirroring data generated using a screen (e.g., a virtual screen) on which icons created when the app is installed in the source device 10 are displayed.

If the external device 20 receives the app information, the external device 20 may configure and display a mirroring screen (e.g., the mirroring display area 23 of FIG. 6) using the app information. The external device 20 may recognize that the user's input for requesting execution of a specific app is generated on the mirroring screen displayed in the mirroring display area 23 through interaction with the user.

If the mirroring function for the specific app is requested to be provided, the external device 20 may share it with the source device 10. Accordingly, the source device 10 and the external device 20 may perform a mirroring and event processing operation in operation 817. The mirroring and event processing operation may include, e.g., an operation performed by the external device 20 to expose the mirroring image to the first display area 620 using mirroring data provided by the source device 10. The mirroring and event processing operation may include, e.g., an operation performed by the external device 20 to expose the extended mirroring image in at least one extended display area 640 by reusing the mirroring data being displayed in the first display area 620 or the mirroring data that has been displayed as the mirroring image before.

In operation 819, the external device 20 may determine whether an app termination event is generated. The app termination event may be generated, e.g., when the user's input indicates the request for terminating the mirroring function through interaction with the user by the external device 20.

If the app termination event is generated, the external device 20 may transfer an app termination request to the source device 10 in operation 821. If the app termination is requested, the external device 20 may transfer identification information indicating the app to be requested to be terminated, together therewith.

If the source device 10 receives the app termination request from the external device 20, in operation 823, the source device 10 may terminate the corresponding app and/or the related task. In operation 825, the source device 10 may release a related resource for the mirroring function of the corresponding app requested to be terminated. For example, the source device 10 may release the container unit (e.g., the container units 420-1, 420-2, and 420-N of FIG. 4) provided corresponding to the released requested app. If the container units 420-1, 420-2, and 420-N are released, the virtual displays (e.g., the virtual displays 421-1, 421-2, and 421-N of FIG. 4), the input surfaces (e.g., the input surfaces 423-1, 423-2, and 423-N of FIG. 4) and/or the video encoders (e.g., the video encoders 425-1, 425-2, and 425-N of FIG. 4) may also be discarded.

If the external device 20 transfers the app termination request to the source device 10, in operation 827, the external device 20 may release the related resource for the mirroring function of the app requested to be terminated. For example, the external device 20 may release the remote app container unit (e.g., the remote app container unit 520-1, 520-2, or 520-N of FIG. 5) provided corresponding to the app requested to be terminated. If the remote app container units 520-1, 520-2, and 520-N are released, the video decoders (e.g., the video decoders 521-1, 521-2, and 521-N of FIG. 5), the output surfaces (e.g., the output surfaces 523-1, 523-2, and 523-N of FIG. 5), or the surface views (e.g., the surface views 525-1, 525-2, and 525-N of FIG. 5) constituting the remote app container units 520-1, 520-2, and 520-N may also be discarded.

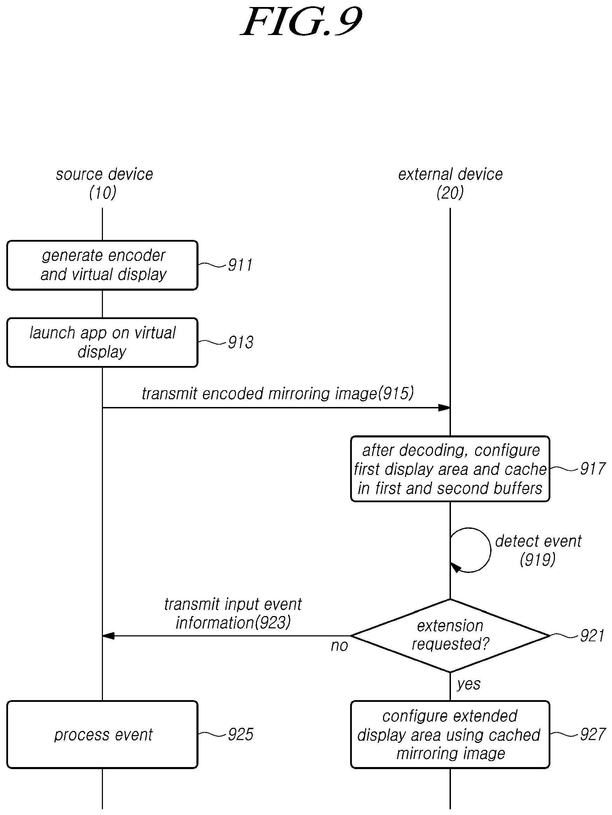

FIG. 9 is a view illustrating a processing procedure for a mirroring and event processing operation in a mirroring system (e.g., the mirroring system 1 of FIG. 1) according to an embodiment.

Referring to FIG. 9, if the mirroring and event processing operation is enabled, in operation 911, the source device 10 may allocate related resources to provide a mirroring function for each of one or more apps for which the mirroring function is requested. The source device 10 may generate, e.g., a container unit (e.g., the container units 420-1, 420-2, and 420-N of FIG. 4) for each app. The container units 420-1, 420-2, and 420-N may include the virtual displays (e.g., the virtual displays 421-1, 421-2, and 421-N of FIG. 4), the input surfaces (e.g., the input surfaces 423-1, 423-2, and 423-N of FIG. 4) and/or the video encoders (e.g., the video encoders 425-1, 425-2, and 425-N of FIG. 4). As a result, in operation 911, the source device 10 may generate video encoders 425-1, 425-2, 425-N and virtual displays 421-1, 421-2, and 421-N for each app to perform mirroring function.

In operation 913, the source device 10 may execute a corresponding app on the virtual displays 421-1, 421-2, and 421-N generated for each app. Executing the app may correspond to executing the app in an allocated memory area. The source device 10 may obtain an image that may be displayed on the virtual displays 421-1, 421-2, and 421-N as the mirroring image by executing the app on the virtual displays 421-1, 421-2, and 421-N. The source device 10 may encode the mirroring image using the video encoders 425-1, 425-2, and 425-N generated for each app.

The source device 10 may transmit mirroring data including the mirroring image compressed by encoding to the external device 20 in operation 915. The mirroring data may include mirroring metadata to be used to mirror the mirroring image. The mirroring metadata may include, e.g., information such as size, resolution, DPI, or display position of the mirroring image. The source device 10 may be, e.g., a digital device such as a smartphone or a tablet PC in which a program such as an app may be installed or executed.

The external device 20 may allocate related resources to provide the mirroring function for each app to be provided with the mirroring function. The external device 20 may generate, e.g., a remote app container unit (e.g., the remote app container units 520-1, 520-2, 520-N of FIG. 5) for each app. The remote app container units 520-1, 520-2, and 520-N may generate video decoders 521-1, 521-2, and 521-N, output surfaces 523-1, 523-2, and 523-N, or surface views 525-1, 525-2, and 525-N.

In operation 917, the external device 20 may decode the compressed mirroring data transferred from the source device 10 by the corresponding video decoders 521-1, 521-2, and 521-N. In operation 917, the external device 20 may configure a first display area (e.g., the first display area 620 of FIG. 6) that displays the mirroring image using the decompressed mirroring data. In operation 917, the external device 20 may temporarily store the decompressed mirroring data in the first buffer (e.g., the first buffer 241 of FIG. 3). As the new mirroring data is temporarily stored in the first buffer 241, the external device 20 may discard the existing mirroring data temporarily stored. In operation 917, the external device 20 may cache the mirroring data used to display the mirroring image in the first display area 620 in the second buffer (e.g., the second buffer 243 of FIG. 3).

In operation 919, the external device 20 may detect an event generated through interaction with the user. The interaction may correspond to, e.g., the user's touch or drag operation being performed in the first display area 620.

If generation of an event through the interaction with the user is detected, in operation 921, the external device 20 may determine whether the event is requesting extension of the mirroring screen. If the generated event does not correspond to the extension request, the external device 20 may transfer information about the input event to the source device 10 in operation 923. If the generated event corresponds to an extension request, the external device 20 may obtain an extended mirroring image using the mirroring data cached in the second buffer 243 in operation 927, and configure an extended display area (e.g., the extended display area 640 of FIG. 6) to display the obtained extended mirroring image.

If receiving information about an input event from the external device 20, the source device 10 may process an operation according to the corresponding event using the information about the input event in operation 925. The source device 10 may configure mirroring data reflecting the result of processing the operation for the corresponding event and transmit it to the external device 20.

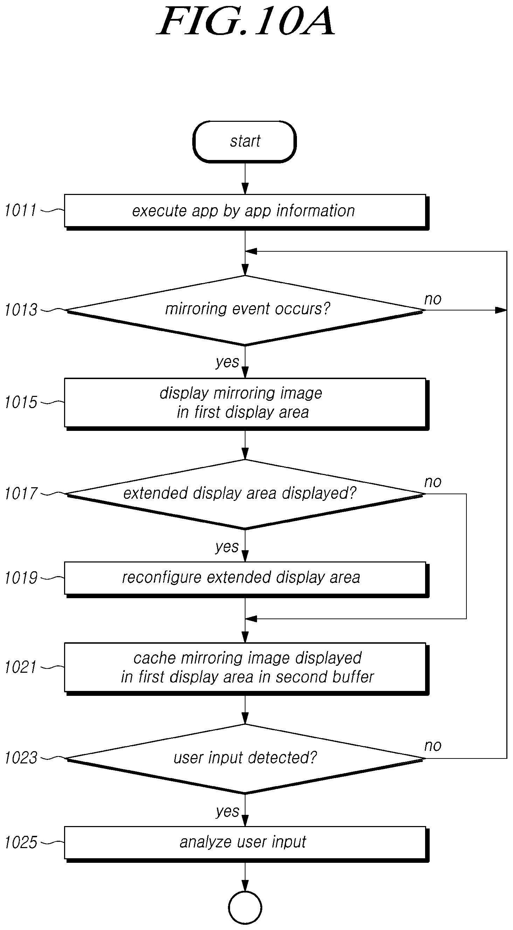

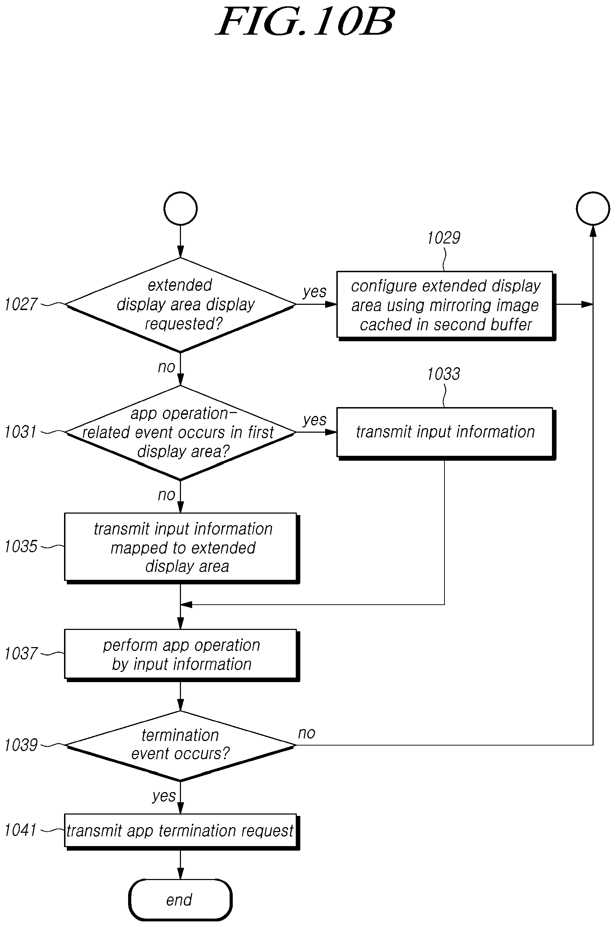

FIGS. 10A and 10B are control flowcharts for an external device (e.g., the external device 20 of FIG. 1) to display a mirroring image in a mirroring system (e.g., the mirroring system 1 of FIG. 1) according to an embodiment.

Referring to FIGS. 10A and 10B, in operation 1011, the external device 20 may request the source device (e.g., the source device 10 of FIG. 1) to execute an app selected by the user using app information to execute the app. The app information may be, e.g., information about an app that may be installed or executed on a source device (e.g., the source device 10 of FIG. 1). The external device 20 may receive, e.g., app information from the source device 10. After the source device 10 generates a virtual display, and then an app is executed on the generated virtual display, the external device 20 may receive mirroring data of the app screen executed on the virtual display from the source device 10.

In operation 1013, the external device 20 may determine whether a mirroring event is generated through interaction with the user. If the mirroring event is generated, in operation 1015, the external device 20 may display the mirroring image in the first display area (e.g., the first display area 620 of FIG. 6) using the mirroring data provided from the source device 10.

If the mirroring image is displayed in the first display area 620, the external device 20 may determine whether the extended mirroring image is being displayed in the extended display area (e.g., the extended display area 640 of FIG. 6) allocated to the display in operation 1017.

If the extended mirroring image is displayed in the extended display area 640, the external device 20 may reconfigure the extended display area 640 in operation 1019. The reconfiguration of the extended display area 640 may include, e.g., newly configuring and displaying an extended mirroring image to be displayed in the extended display area 640.

If the extended mirroring image is not displayed in the extended display area 640 or the reconstruction of the extended display area is completed, the external device 20 may cache the mirroring image displayed in the first display area 620 in the second buffer (e.g., the second buffer 243 of FIG. 3) in operation 1021.

In operation 1023, the external device 20 may determine whether the user's input is detected through interaction with the user. The user's input may correspond to, e.g., touching or dragging a specific position of the first display area 620 or the extended display area 640.

If the user's input is detected, the external device 20 may analyze the user input in operation 1025. Analysis of the user input may be, e.g., an operation for obtaining the type of the user input.

If the analysis of the user input is completed, the external device 20 may determine, in operation 1027, whether the user's input is a request to display the extended mirroring image in the extended display area 640. If the user's input is not a request to display the extended mirroring image, in operation 1031, the external device 20 may determine whether an app operation-related event is generated in the first display area 620.

If the user's input is a request to display the extended mirroring image, in operation 1029, the external device 20 may generate an extended mirroring image using the mirroring data cached in the second buffer 243 and display the generated extended mirroring image in the extended display area 640.

If the user's input is generated in the first display area 620 as an app-related event, the external device 20 may transmit input information according to the user's input to the source device 10 in operation 1033. The input information may be used, e.g., for the source device 10 to drive the corresponding app.

If the user's input is generated in the extended display area 640 as an app-related event, the external device 20 may transmit the input information mapped to the extended display area 640 to the source device 10 in operation 1035. The input information may be used, e.g., for the source device 10 to drive the corresponding app.

In operation 1037, the external device 20 may receive mirroring data created by the source device 10 driving the corresponding app using the input information, and update the mirroring image to be displayed in the first display area 620 using the received mirroring data. The mirroring data may be temporarily stored in the first buffer 241 at the time of reception, for example. The mirroring data may be temporarily stored in the second buffer 243 after, e.g., the mirroring image to be displayed in the first display area 620 is updated.

In operation 1039, the external device 20 may determine whether a termination event for requesting termination of the mirroring function is generated through interaction with the user. If the termination event is generated, the external device 20 may transmit an app termination request to the source device 10 in operation 1041. The app termination request may, e.g., enable the source device 10 to discard the virtual display generated to execute the app.

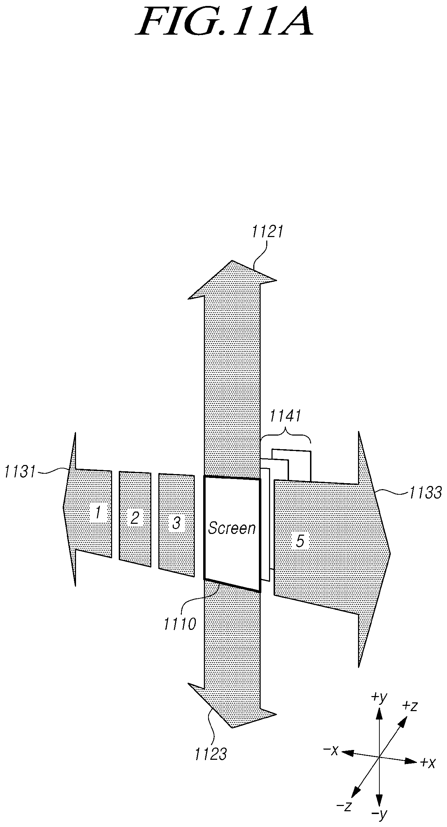

FIG. 11A is an exemplary view illustrating extending a mirroring screen in an external device (e.g., the external device 20 of FIG. 1) supporting the mirroring function according to an embodiment.

Referring to FIG. 11A, if the external device 20 displays a mirroring screen including a mirroring image in the first display area 1110, the external device 20 may extend a display area (e.g., the extended display area 640 of FIG. 6) to display an extended mirroring screen by the extended mirroring image around the first display area 1110 on the display (e.g., the display 600 of FIG. 6).

According to an example, the external device 20 may additionally allocate one or more extended display areas in the -x-axis direction 1131 in the first display area 1110. The external device 20 may display an extended mirroring image in the one or more extended display areas using the mirroring image previously displayed in the first display area 1110 or currently displayed in the first display area 1110.

According to an example, the external device 20 may additionally allocate one or more extended display areas in the +x-axis direction 1133 in the first display area 1110. The external device 20 may display an extended mirroring image in the one or more extended display areas using the mirroring image previously displayed in the first display area 1110 or currently displayed in the first display area 1110.

According to an example, the external device 20 may additionally allocate one or more extended display areas in the first display area 1110 in the +y-axis direction 1121. The external device 20 may display an extended mirroring image in the one or more extended display areas using the mirroring image previously displayed in the first display area 1110 or currently displayed in the first display area 1110.

According to an example, the external device 20 may additionally allocate one or more extended display areas in the first display area 1110 in the -y-axis direction 1123. The external device 20 may display an extended mirroring image in the one or more extended display areas using the mirroring image previously displayed in the first display area 1110 or currently displayed in the first display area 1110.

According to an example, the external device 20 may additionally allocate one or more extended display areas in the +z-axis direction 1141 in the first display area 1110. The external device 20 may display an extended mirroring image in the one or more extended display areas using the mirroring image previously displayed in the first display area 1110 or currently displayed in the first display area 1110.

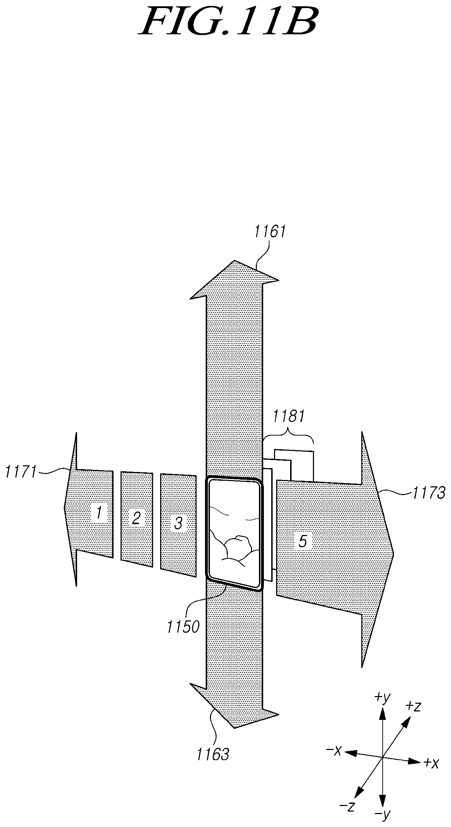

FIG. 11B is an exemplary view illustrating extending a mirroring screen in an external device (e.g., the external device 20 of FIG. 1) supporting a mirroring function according to an embodiment.

Referring to FIG. 11B, if the external device 20 does not provide a mirroring screen on the display (e.g., the display 600 of FIG. 6) and the user identifies the display (e.g., the display module 110 of FIG. 3) of the source device 10 (e.g., the source device 10 of FIG. 1) through the transparent window, the screen 1150 of the source device 10 (hereinafter referred to as a 'source device screen 1150) seen through the transparent window may be used as a first display area (e.g., the first display area 1110 of FIG. 11A). For example, the external device 20 may extend the display area (e.g., the extended display area 640 of FIG. 6) to display the extended mirroring screen by the mirroring image around the source device screen 1150 seen through the transparent window.

According to an example, the external device 20 may additionally allocate one or more extended display areas in the -x-axis direction 1171 on the source device screen 1150. The external device 20 may display the extended mirroring image in the one or more extended display areas using the mirroring data provided by the source device 10.

According to an example, the external device 20 may additionally allocate one or more extended display areas in the +x-axis direction 1173 on the source device screen 1150, for example. The external device 20 may display the extended mirroring image in the one or more extended display areas using the mirroring data provided by the source device 10.

According to an example, the external device 20 may additionally allocate one or more extended display areas in the +y-axis direction 1161 on the source device screen 1150, for example. The external device 20 may display the extended mirroring image in the one or more extended display areas using the mirroring data provided by the source device 10.

According to an example, the external device 20 may additionally allocate one or more extended display areas in the -y-axis direction 1163 on the source device screen 1150. The external device 20 may display the extended mirroring image in the one or more extended display areas using the mirroring data provided by the source device 10.

According to an example, the external device 20 may additionally allocate one or more extended display areas in the +z-axis direction 1181 on the source device screen 1150, for example. The external device 20 may display the extended mirroring image in the one or more extended display areas using the mirroring data provided by the source device 10.

In FIGS. 11A and 11B described above, the position or progress direction (e.g., +x-axis direction, -x-axis direction, +y-axis direction, -y-axis direction, +z-axis direction, or -z-axis direction) to allocate the extended display area is determined based on input information obtained through interaction with the user, but when there is not enough space to provide the extended display area at the determined position or progress direction, the position of the first display area may be moved, the position of the extended display area may be changed, or the direction in which the extended display area is to be provided may be changed. To that end, the external device 20 may additionally perform interaction with the user.

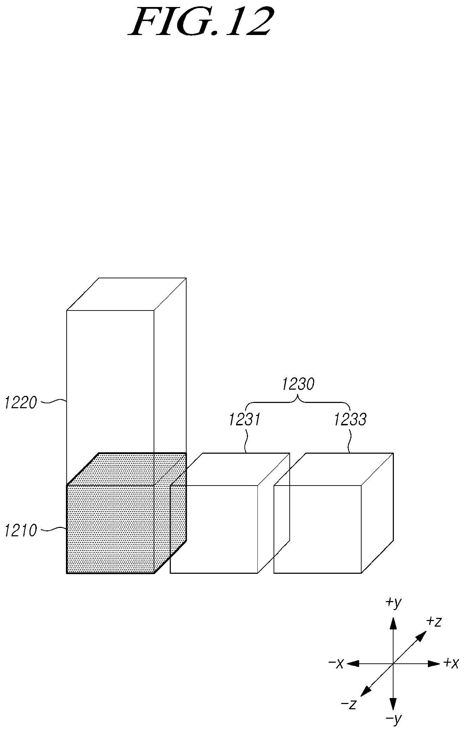

FIG. 12 is an exemplary view illustrating extending a mirroring screen using a 3D mirroring image in a mirroring system (e.g., the mirroring system 1 of FIG. 1) according to an embodiment.

Referring to FIG. 12, an external device (e.g., the external device 20 of FIG. 1) included in the mirroring system 1 may display a 3D mirroring image in the first display area 1210 using 3D mirroring data provided from the source device 10.

According to an example, the external device 20 may reuse 3D mirroring data previously displayed in the first display area 1210, or may reuse 3D mirroring data displayed in the first display area 1210 as 3D mirroring data is newly provided from the source device 10 to display a 3D extended mirroring image in the extended display area 1220 extended upward (+y-axis direction).

According to an example, the external device 20 may reuse 3D mirroring data previously displayed in the first display area 1210, or may reuse 3D mirroring data displayed in the first display area 1210 as 3D mirroring data is newly provided from the source device 10 to display a 3D extended mirroring image in the extended display area 1231 corresponding to the extended display area 1230 extended in the right direction (+x-axis direction). In this case, the external device 20 may display a three-dimensional extended mirroring image previously displayed in the first extended display area 1231 in the second extended display area 1233.

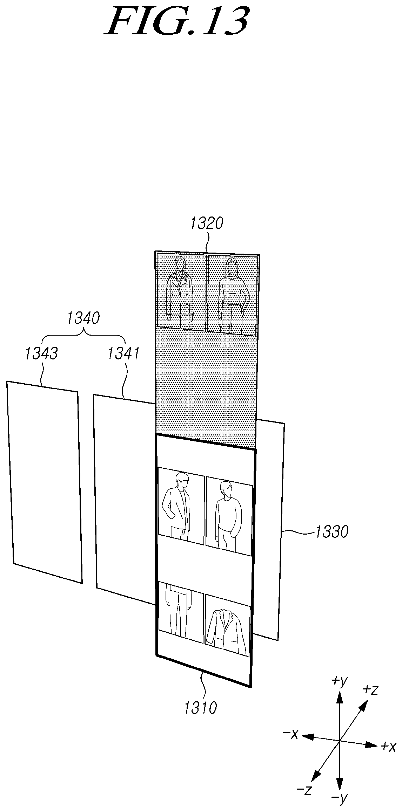

FIG. 13 is an exemplary view illustrating that an external device (e.g., the external device 20 of FIG. 1) constituting a mirroring system (e.g., the mirroring system 1 of FIG. 1) according to an embodiment provides interaction in an extended display area (e.g., the extended display area 640 of FIG. 6).

Referring to FIG. 13, the external device (e.g., the external device 20 of FIG. 1) may dispose the extended display screen 1330 in which the immediately prior mirroring image is displayed to hide the first display screen 1310 in which the mirroring image is displayed therebehind. In response to the number of times in which mirroring has been performed (e.g., the number of TABs), the external device 20 may extend the mirroring image corresponding to each number of times and expose it to an independent extended display screen 1340. Extending the extended display screens 1330, 1341, and 1343 in response to the number of times of mirroring may be performed, e.g., by the external device 20 through interaction with the user in response to the number of TABs of the user.

If the external device 20 recognizes an input requesting to display the extended display screen 1320 in the upper direction (+y-axis direction) through interaction (e.g., scroll) with the user, it may expose the extended display screen 1320 may be exposed in concatenation in the upper direction (+y-axis direction) of the first display screen 1310.

As described above, the external device 20 may determine the display direction (e.g., +x-axis direction, -x-axis direction, +y-axis direction, -y-axis direction, +z-axis direction, or -z-axis direction) of the extended display screen according to the user's gesture type through interaction with the user.

According to an example, the external device 20 may prepare a table with a command to be executed if interaction is generated for each area or range of the first display screen or the extended display screen. If an event is generated in a specific area or range of the first display screen or the extended display screen while performing interaction with the user, the external device 20 may execute an operation according to a command defined in the table for a specific area or range generated by the event. The table may be provided in an external server as well as the external device 20. The table may be provided in software. A new command may be added to the table according to implementation at the time when a specific activity or screen is executed.

According to an example, commands according to motion (e.g., activity touch, scroll, etc.) through interaction with the user are not provided for each app, and basic commands that may be commonly applied may be applied equally to all the apps.

According to an example, it may be possible to implement a different method to be performed in each circumstance with a callback structure in software.

Table 1 below shows an example of a table defining commands performed for each interaction.

**[Table 1]**

| | |
|---|---|
| area 1 touch | -Execute the corresponding screen with information (intent) from activity 1 to bring the corresponding activity up to the top |
| | -Execute the corresponding command if the touched point is the place where a touch event is generated after the activity is moved |
| area 2 touch | -Execute the corresponding screen with the information (intent) of activity 1 to bring the corresponding activity up to the top-Execute the corresponding command if the touched point is the place where the touch event is generated after the activity is moved |
| area 3 touch | -Scroll the corresponding page by the range of X and Y coordinates of area 3-Execute the corresponding command if the touched point is the place where the touch event is generated after scrolling |

According to an example, if the touched point after scrolling is the place where the touch event is generated, and if the corresponding page is dynamic when the corresponding command is executed, the external device 20 brings up the page again so that it may be changed in a different state at the time when the touch input is provided. In this case, it may be determined whether the corresponding area may be interactable through the difference in pixel value between the image held by the buffer provided in the external device 20 and the newly opened image.

According to an example, as the new mirroring image is mirrored in the first display area, the external device 20 may move the previously displayed mirroring image to the extended display area and display it. In this case, if the user touches a specific position of the extended mirroring image exposed in the extended display area, the external device 20 may move and display the extended mirroring image displayed in the extended display area to the first display area. The external device 20 may also generate an event by considering that a touch is made to the position corresponding to a specific position touched by the user when the extended display area is displayed in the mirroring image moved and displayed in the first display area.

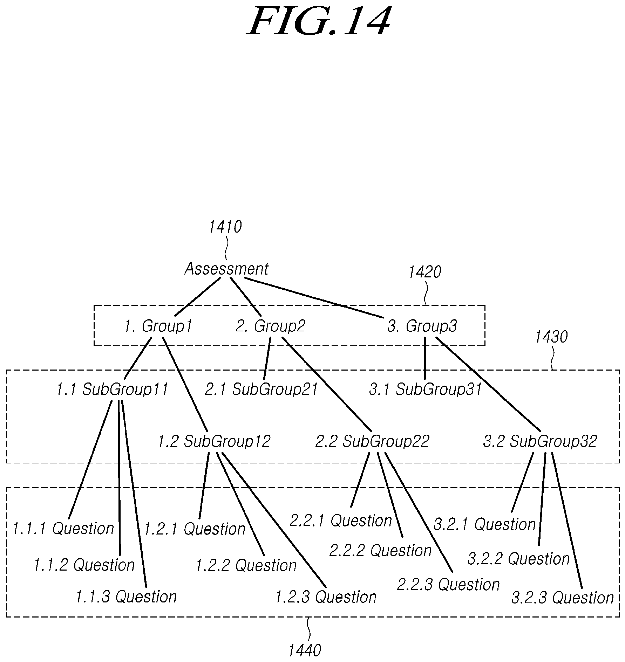

FIG. 14 is a history hierarchy tree for managing an extended display area in a mirroring system (e.g., the mirroring system 1 of FIG. 1) according to an embodiment.

Referring to FIG. 14, an external device (e.g., the external device 20 of FIG. 1) that provides an extended area for the mirroring function in the mirroring system 1 may allocate an extended display area (e.g., the extended display area 640 of Fig. 6) to the display (e.g., the display 600 of Fig. 6) through interaction (e.g., the interaction 25 of Fig. 2) with the user. The extended display area 640 allocated to the display 600 may have a hierarchical structure over time. The hierarchical structure may include a second layer (Group1, Group2, Group3) 1420, a third layer (Sub_Group11, Sub_Group12, Sub_Group21, Sub_Group22, Sub_Group31, Sub_Group32) 1430, or a fourth layer (question) 1440 with respect to a first layer (assessment 1410), which is the highest layer. For example, the external device 20 may map the extended display area 640 that displays the extended mirroring image on the display 600 to one of the layers constituting the history hierarchy tree and manage them. For example, if a specific interaction is executed with the user, layer management by interaction, such as removing areas in the other trees, may be performed.

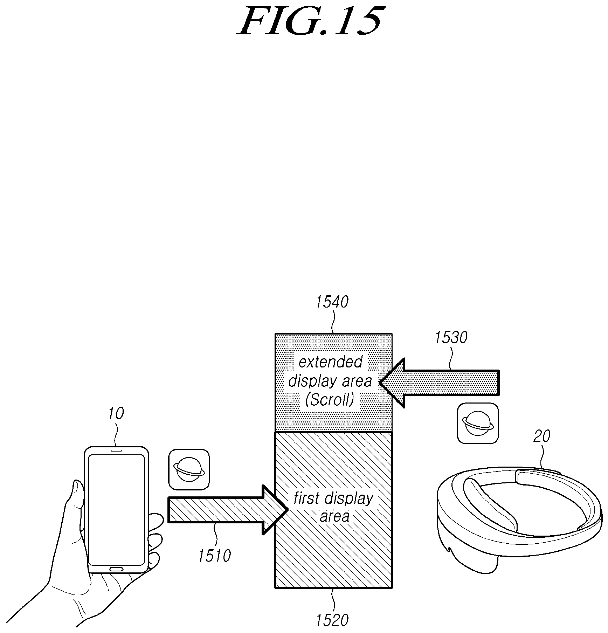

FIG. 15 is an exemplary view illustrating self-operating an extended display area in a mirroring system (e.g., the mirroring system 1 of FIG. 1) according to an embodiment.

Referring to FIG. 15, if the external device 20 may directly execute and operate software such as an app, the external device 20 may receive mirroring data 1510 about the app executed on the virtual display of the source device 10 from the source device 10. The external device 20 may display the mirroring image in the first display area 1520 using the mirroring data 1510 provided from the source device 10. The external device 20 may execute the same app as the app executed on the virtual display of the source device 10 by itself. The external device 20 may display a screen 1530 according to the app executed by itself in the extended display area 1540.

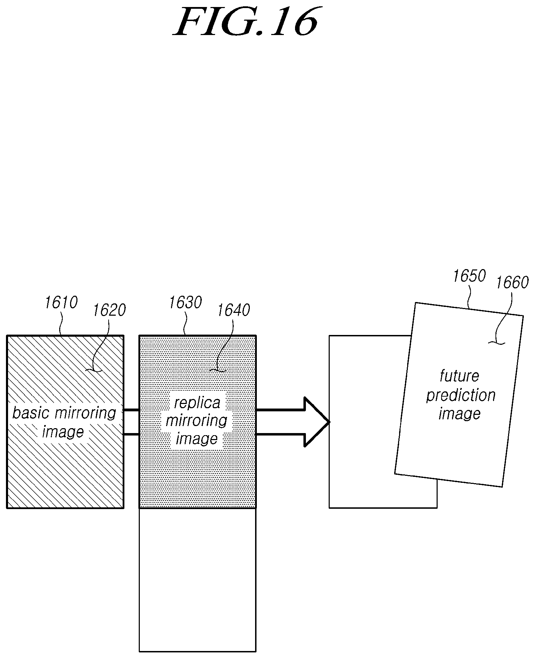

FIG. 16 is a view illustrating an example in which an external device (e.g., the external device 20 of FIG. 1) extends a mirroring image in a time space according to an embodiment.

Referring to FIG. 16, the external device 20 may display the mirroring image 1620 (hereinafter, referred to as a 'basic mirroring image 1620) in the first display area 1610. If a future prediction image request event is generated, the external device 20 may obtain a replica mirroring image 1640 by copying the mirroring image displayed in the first display area 620. The external device 20 may render the replica mirroring image 1640 and display the same in the extended display area 1630 allocated to cover the basic mirroring image 1620 displayed in the first display area 1610.

The external device 20 may obtain a future prediction image by performing an operation corresponding to an input provided in the extended display area 1630 displaying the replica mirroring image 1640. The future prediction image may be rendered to the external device 20. The future prediction image 1660 may be displayed in the extended display area 1650 through interaction with the user after the rendering.

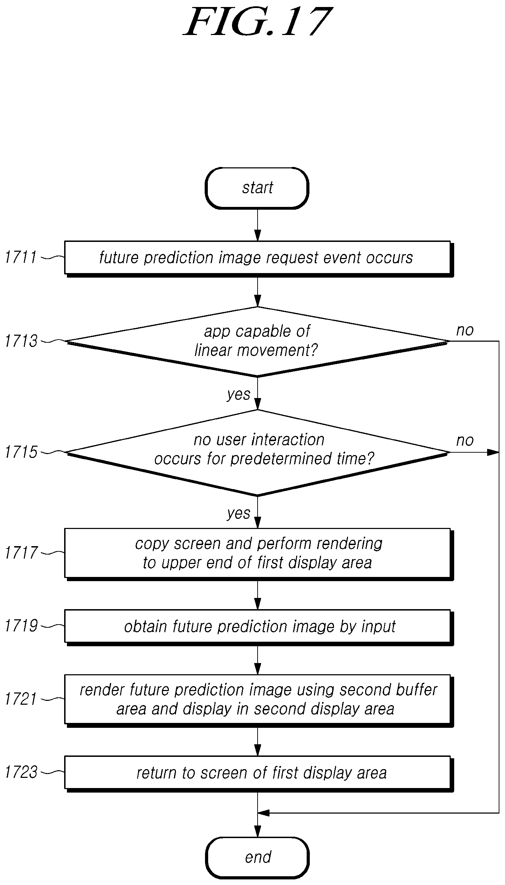

FIG. 17 is a control flowchart for extending a mirroring image in a time space in an external device (e.g., the external device 20 of FIG. 1) according to an embodiment.

Referring to FIG. 17, the external device 20 may identify the occurrence of a future prediction image request event in operation 1711. The future prediction image request event may be generated, e.g., through interaction between the external device 20 and the user. The future prediction image request event may be to request to predict a mirroring image that is expected to occur next to the basic mirroring image (e.g., the basic mirroring image 1620 of FIG. 16) currently displayed in the first display area (e.g., the first display area 1610 of FIG. 16).

For example, the external device 20 may execute the operation according to the corresponding event in response to an input of at least one interaction expected to occur in the future in a state in which the current mirroring image (e.g., the basic mirroring image 1620 of Fig. 16) is held in a specific circumstance and visualize the mirroring image (e.g., the future prediction image 1660 of Fig. 16) secured as a result of the executed operation through the mirroring display area (e.g., the extended display area 1650 of Fig. 16).

More specifically, in operation 1713, the external device 20 may determine whether an app for which a future prediction image is requested is an app capable of linear movement. That the linear movement is possible may mean that linear movement is free. For example, an app capable of linear movement may include an app in which a change in the mirroring image does not occur frequently. The app capable of linear movement may be, e.g., an app that provides a weather forecast function.

In operation 1715, the external device 20 may determine whether interaction with the user has not occurred for a predetermined time. The reason why the interaction with the user does not occur for the predetermined time is that it may be predicted that the mirroring image is unlikely to be changed. That the interaction does not occur for the predetermined time may correspond to a case in which the app being executed for providing to the basic mirroring image 1620 displayed in the first display area 1610 is an app that does not require frequent interaction with the user.

If the app is capable of linear movement, and no interaction has occurred for a predetermined period of time, in operation 1717, the external device 20 may perform rendering to serve as a shield for the first display area 1610 by copying the basic mirroring image 1620 displayed in the first display area 1610. For example, the external device 20 may render the copied mirroring image (e.g., the replica mirroring image 1640 of FIG. 16) and display the future prediction image 1660 in the extended display area 1650 so that the basic mirroring image 1620 displayed in the first display area 1610 is covered.

In operation 1719, the external device 20 may provide an input to the area in which the copied mirroring image 1640 is displayed (e.g., the extended display area 1630 of FIG. 16) so that a designated operation is performed, and perform the designated operation to obtain a future prediction image 1660. The step (depth) of performing the operation for obtaining the future prediction image 1660 may be performed more than once.

If the future prediction image 1660 is obtained, in operation 1721, the external device 20 may render the obtained future prediction image 1660 using the second buffer (e.g., the second buffer 243 of FIG. 3). After rendering, the future prediction image 1660 may be visually exposed to the user through the extended display area 1650 through interaction with the user.

In operation 1723, the external device 20 removes the shield so that the basic mirroring image 1620 previously displayed in the first display area 1610 may be exposed to the user again.

By what has been described above, the external device 20 may allow the user to experience a future prediction mirroring image by utilizing a wide display area even if a function, such as preview next, is not separately provided.

Fig. 18 is a block diagram illustrating an electronic device 1801 in a network environment 1800 according to various embodiments;

Referring to Fig. 18, the electronic device 1801 in the network environment 1800 may communicate with at least one of an electronic device 1802 via a first network 1898 (e.g., a short-range wireless communication network), or an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module (SIM) 1896, or an antenna module 1897. In an embodiment, at least one (e.g., the connecting terminal 1878) of the components may be omitted from the electronic device 1801, or one or more other components may be added in the electronic device 101. According to an embodiment, some (e.g., the sensor module 1876, the camera module 1880, or the antenna module 1897) of the components may be integrated into a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to one embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a central processing unit (CPU) or an application processor (AP)), or an auxiliary processor 1823 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1801 includes the main processor 1821 and the auxiliary processor 1823, the auxiliary processor 1823 may be configured to use lower power than the main processor 1821 or to be specified for a designated function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an image signal processor or a communication processor) may be implemented as part of another component (e.g., the camera module 1880 or the communication module 1890) functionally related to the auxiliary processor 123. According to an embodiment, the auxiliary processor 1823 (e.g., the neural processing unit) may include a hardware structure specified for artificial intelligence model processing. The artificial intelligence model may be generated via machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by other component (e.g., the processor 1820) of the electronic device 1801, from the outside (e.g., a user) of the electronic device 1801. The input module 1850 may include, for example, a microphone, a mouse, a keyboard, keys (e.g., buttons), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display 1860 may include, for example, a display, a hologram device, or a projector and control circuitry to control a corresponding one of the display, hologram device, and projector. According to an embodiment, the display 1860 may include a touch sensor configured to detect a touch, or a pressure sensor configured to measure the intensity of a force generated by the touch.

The audio module 1870 may convert a sound into an electrical signal and vice versa. According to an embodiment, the audio module 1870 may obtain the sound via the input module 1850, or output the sound via the sound output module 1855 or a headphone of an external electronic device (e.g., an electronic device 1802) directly (e.g., wiredly) or wirelessly coupled with the electronic device 1801.

The sensor module 1876 may detect an operational state (e.g., power or temperature) of the electronic device 1801 or an environmental state (e.g., a state of a user) external to the electronic device 101, and then generate an electrical signal or data value corresponding to the detected state. According to an embodiment, the sensor module 1876 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. According to an embodiment, the interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, a SD card connector, or an audio connector (e.g., a headphone connector).

The haptic module 1879 may convert an electrical signal into a mechanical stimulus (e.g., a vibration or motion) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, image signal processors, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device 1804 via a first network 1898 (e.g., a short-range communication network, such as Bluetooth^{™}, wireless-fidelity (Wi-Fi) direct, or infrared data association (IrDA)) or a second network 1899 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1892 may identify or authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1897 may transmit or receive a signal or power to or from the outside (e.g., the external electronic device). According to an embodiment, the antenna module 1897 may include one antenna including a radiator formed of a conductor or conductive pattern formed on a substrate (e.g., a printed circuit board (PCB)). According to an embodiment, the antenna module 1897 may include a plurality of antennas (e.g., an antenna array). In this case, at least one antenna appropriate for a communication scheme used in a communication network, such as the first network 1898 or the second network 1899, may be selected from the plurality of antennas by, e.g., the communication module 1890. The signal or the power may then be transmitted or received between the communication module 1890 and the external electronic device via the selected at least one antenna. According to an embodiment, other parts (e.g., radio frequency integrated circuit (RFIC)) than the radiator may be further formed as part of the antenna module 1897.

According to various embodiments, the antenna module 1897 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 1801 and the external electronic device 1804 via the server 1808 coupled with the second network 1899. The external electronic devices 1802 or 1804 each may be a device of the same or a different type from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an Internet-of-things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

According to an embodiment, an electronic device (e.g., the external device 20 of Fig. 1) may comprise a display module 210 configured to display a mirroring image on a display window 600, a communication module 250 configured to perform communication with an external device 10, a sensor module 230 configured to detect a user's gesture and generate a sensing signal corresponding to the detected user gesture, a memory 240 configured to allocate one or more buffer areas 241, 243, and at least one processor 220 electrically connected to the display module 210, the communication module 250, the sensor module 230, or the memory 240 and configured to control an operation of the display module 210, the communication module 250, the sensor module 230, or the memory 240.

According to an embodiment, the at least one processor 220 may be configured to receive mirroring data 31 from the external device 10 through the above communication module 250 and control the display module 210 to display a mirroring image 650 in a first display area 620 allocated in the display window 600 using the mirroring data 31.

According to an embodiment, the at least one processor 220 may control the display module 210 to display an extended mirroring image 660 in at least one extended display area 640 allocated in the display window 600 using the mirroring data 31 according to the user gesture 630 detected by the sensor module 230 through interaction 25 with the user.

According to an embodiment, the extended mirroring data 731, 733, or 735 may be obtained from previous mirroring data 731, 733, or 735 that has been used to display the mirroring image 650.

According to an embodiment, the at least one processor 220 may be configured to temporarily store mirroring data corresponding to a new mirroring image displayed in the first display area 620 according to the user gesture 630 in a first buffer area 241 provided in the memory 240.

According to an embodiment, the at least one processor 220 may be configured to, if the mirroring image is displayed in the first display area, temporarily store the mirroring data temporarily stored in the first buffer area as the extended mirroring data in a second buffer area allocated to the memory.

According to an embodiment, the at least one processor 220 may be configured to, if the mirroring image is displayed in the first display area, obtain new extended mirroring data from the mirroring data temporarily stored in the first buffer area, and temporarily store the new extended mirroring data in a second buffer area allocated to the memory.

According to an embodiment, the at least one processor 220 may be configured to render the mirroring image 650 in response to the user gesture 630 to obtain the extended mirroring image 660.

According to an embodiment, the mirroring data 31 may include meta information indicating a link or a coordinate and image information to be mirrored.

According to an embodiment, the at least one processor 220 may reconfigure the extended mirroring image 660 displayed in the at least one extended display area 640 using mirroring data corresponding to a new mirroring image 650 if the new mirroring image is displayed in the first display area 620.

According to an embodiment, the at least one processor 220 may be configured to allocate the at least one extended display area 640 adjacent to the first display area 620 in an upper/lower direction (e.g., +y-axis direction or -y-axis direction) or left/right direction (e.g., +x-axis direction or -x-axis direction) according to the user gesture.

According to an embodiment, the at least one processor may, if the user gesture 630 is detected in the at least one extended display area 640, identify input information mapped to a position where the user gesture 630 is detected in the at least one extended display area 640 and control the communication module 250 to transmit the identified input information to the external electronic device 10.

According to an embodiment, the at least one processor 220 may be configured to set an area of interest on the display window 600 through eye tracking by the sensor module 230 and allocate at least one extended display area 640 to the set area of interest.

According to an embodiment, a method for display in an electronic device (e.g., the external device 20 of Fig. 1) may comprise displaying a mirrored image in a first display area allocated on a display based on a mirroring function.

According to an embodiment, the display method may comprise temporarily storing mirroring data corresponding to the mirroring image, and displaying an extended mirroring image in at least one extended display area allocated on the display using the mirroring data according to a user gesture obtained through interaction with a user.

According to an embodiment, the display method may comprise temporarily storing mirroring data corresponding to a new mirroring image displayed in the first display area according to the user gesture.

According to an embodiment, the display method may comprise temporarily storing the temporarily stored mirroring data as the extended mirroring data if the mirroring image is displayed in the first display area.

According to an embodiment, the display method may comprise obtaining new extended mirroring data from the temporarily stored mirroring data if the mirroring image is displayed in the first display area and temporarily storing the new extended mirroring data.

According to an embodiment, displaying the extended mirroring image may include rendering the mirroring image in response to the user gesture to obtain the extended mirroring image.

According to an embodiment, the mirroring data may include meta information indicating a link or a coordinate and image information to be mirrored.

According to an embodiment, displaying the extended mirroring image may include reconfiguring the extended mirroring image displayed in the at least one extended display area using mirroring data corresponding to a new mirroring image if the new mirroring image is displayed in the first display area.

According to an embodiment, displaying the extended mirroring image may include determining a direction in which the at least one extended display area is to be allocated among an upper/lower direction (e.g., +y-axis direction or -y-axis direction) or left/right direction (e.g., +x-axis direction or -x-axis direction) in the first display area according to the user gesture.

According to an embodiment, the display method may comprise, if the user gesture is detected in the at least one extended display area, identifying input information mapped to a position where the user gesture is detected in the at least one extended display area, and transmitting the identified input information to an external electronic device.

According to an embodiment, displaying the extended mirroring image may include setting an area of interest on the display through eye tracking for the user and allocating the at least one extended display area to the set area of interest.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., the memory 140) that is readable by a machine (e.g., the digital device 120). For example, a processor (e.g., the controller 123) of the machine (e.g., the electronic device 120) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (20), comprising:
a display module (210) configured to display a mirroring image on a display window (600);
a communication module (250) configured to perform communication with an external device (10);
a sensor module (230) configured to detect a user's gesture and generate a sensing signal corresponding to the detected user gesture;
a memory (240) configured to allocate one or more buffer areas (241, 243); and
at least one processor (220) electrically connected to the display module (210), the communication module (250), the sensor module (230), or the memory (240) and configured to control an operation of the display module (210), the communication module (250), the sensor module (230), or the memory (240),
wherein the at least one processor (220):
receives mirroring data (31) from the external device (10) through the above communication module (250);
controls the display module (210) to display a mirroring image (650) in a first display area (620) allocated in the display window (600) using the mirroring data (31); and
controls the display module (210) to display an extended mirroring image (660) in at least one extended display area (640) allocated in the display window (600) using the mirroring data (31) according to the user gesture (630) detected by the sensor module (230) through interaction (25) with the user.

2. The electronic device of claim 1, wherein the at least one processor (220) is configured to temporarily store mirroring data corresponding to a new mirroring image displayed in the first display area (620) according to the user gesture (630) in a first buffer area (241) provided in the memory (240).

3. The electronic device of claim 1, wherein the at least one processor (220) is configured to render the mirroring image (650) in response to the user gesture (630) to obtain the extended mirroring image (660).

4. The electronic device of claim 1, wherein the mirroring data (31) includes meta information indicating a link or a coordinate and image information to be mirrored.

5. The electronic device of claim 1, wherein the at least one processor (220) reconfigures the extended mirroring image (660) displayed in the at least one extended display area (640) using mirroring data corresponding to a new mirroring image (650) if the new mirroring image is displayed in the first display area (620).

6. The electronic device of any one of claims 1 to 5, wherein the at least one processor (220) is configured to allocate the at least one extended display area (640) adjacent to the first display area (620) in an upper/lower or left/right direction according to the user gesture (630).

7. The electronic device of any one of claims 1 to 5, wherein the at least one processor (220), if the user gesture (630) is detected in the at least one extended display area (640), identifies input information mapped to a position where the user gesture (630) is detected in the at least one extended display area (640) and controls the communication module (250) to transmit the identified input information to the external electronic device (10).

8. The electronic device of claim 7, wherein the at least one processor (220) is configured to set an area of interest on the display window (600) through eye tracking by the sensor module (230) and allocate at least one extended display area (640) to the set area of interest.

9. A method for display in an electronic device, the method comprising:
displaying (1015) a mirrored image in a first display area allocated on a display based on a mirroring function;
temporarily storing (1017, 1019) mirroring data corresponding to the mirroring image; and
displaying (1019) an extended mirroring image in at least one extended display area allocated on the display using the mirroring data according to a user gesture obtained through interaction with a user.

10. The method of claim 9, further comprising temporarily storing mirroring data corresponding to a new mirroring image displayed in the first display area according to the user gesture.

11. The method of claim 9, wherein displaying the extended mirroring image includes rendering the mirroring image in response to the user gesture to obtain the extended mirroring image.

12. The method of claim 9, wherein the mirroring data includes meta information indicating a link or a coordinate and image information to be mirrored.

13. The method of claim 9, wherein displaying the extended mirroring image includes reconfiguring the extended mirroring image displayed in the at least one extended display area using mirroring data corresponding to a new mirroring image if the new mirroring image is displayed in the first display area.

14. The method of any one of claims 9 to 13, wherein displaying the extended mirroring image includes:
setting an area of interest on the display through eye tracking for the user; and
allocating the at least one extended display area to the set area of interest.

15. The method of any one of claims 9 to 13, further comprising:
if the user gesture is detected in the at least one extended display area, identifying input information mapped to a position where the user gesture is detected in the at least one extended display area; and
transmitting the identified input information to an external electronic device.
